# EUROPÄISCHE PATENTSCHRIFT

(11) **EP 2 934 968 B1**
(45) Veröffentlichungstag und Bekanntmachung des Hinweises auf die Patenterteilung: **04.01.2017**
(21) Anmeldenummer: 13795790.8
(22) Anmeldetag: 28.11.2013
(51) Int. Cl.: B60T 8/40, B60T 7/04, B60T 13/68, B60T 13/74, B60T 17/22

(54) **ELEKTROHYDRAULISCHE FAHRZEUG-BREMSANLAGE UND VERFAHREN ZUM BETREIBEN DERSELBEN**
ELECTROHYDRAULIC MOTOR VEHICLE BRAKE SYSTEM AND METHOD FOR OPERATING THE SAME
SYSTÈME DE FREINAGE ÉLECTROHYDRAULIQUE POUR VÉHICULE ET PROCÉDÉ DE FONCTIONNEMENT

(30) Priorität: 21.12.2012 DE 102012025423
(43) Veröffentlichungstag der Anmeldung: 28.10.2015
(73) Patentinhaber: Lucas Automotive GmbH, 56070 Koblenz (DE)
(72) Erfinder: KNECHTGES, Josef, 56727 Mayen (DE); GRIESER-SCHMITZ, Stefan, 56070 Koblenz (DE)
(74) Vertreter: Röthinger, Rainer
(86) Internationale Anmeldenummer: PCT/EP2013/074922
(87) Internationale Veröffentlichungsnummer: WO 2014/095283

(56) Entgegenhaltungen:
- EP-A1- 2 058 189
- EP-A2- 2 460 701
- WO-A1-2008/003614
- WO-A2-2009/013586
- DE-A1- 10 338 046
- DE-A1- 10 355 239
- DE-A1-102009 043 484
- DE-A1-102010 042 694
- JP-A- 2010 269 642
- US-A1- 2012 144 823

## Beschreibung

### Technisches Gebiet

Die vorliegende Offenbarung betrifft allgemein das Gebiet der Fahrzeug-Bremsanlagen. Konkret wird eine elektrohydraulische Fahrzeug-Bremsanlage mit einem elektromechanischen Aktuator zur Betätigung der Bremsanlage beschrieben.

### Hintergrund

Elektromechanische Aktuatoren finden bereits seit geraumer Zeit in Fahrzeug-Bremsanlagen Verwendung, beispielsweise zur Realisierung einer elektrischen Parkbremsfunktion (EPB). Bei elektromechanischen Bremsanlagen (EMB) ersetzen sie die herkömmlichen Hydraulikzylinder an den Radbremsen.

Aufgrund technischer Fortschritte hat sich die Leistungsfähigkeit der elektromechanischen Aktuatoren fortlaufend erhöht. Es wurde daher in Erwägung gezogen, derartige Aktuatoren auch zur Implementierung moderner Fahrdynamikregelsysteme heranzuziehen. Zu solchen Regelsystemen zählen ein Antiblockiersystem (ABS), eine Antriebsschlupfregelung (ASR) oder ein elektronischen Stabilitätsprogramm (ESP), auch als Fahrzeugstabilitätsregelung (Vehicle Stability Control, VSC) bezeichnet.

Die WO 2006/111393 A lehrt eine elektrohydraulische Bremsanlage mit einem hochdynamischen elektromechanischen Aktuator, der die Druckmodulation im Fahrdynamikregelbetrieb übernimmt. Der in der WO 2006/111393 A beschriebene elektromechanische Aktuator ist dazu vorgesehen, direkt auf einen Hauptzylinder der Bremsanlage einzuwirken. Aufgrund der hohen Dynamik des elektromechanischen Aktuators lassen sich die hydraulischen Komponenten der aus der WO 2006/111393 A bekannten Bremsanlage auf ein einziges 2/2-Wege-Ventil pro Radbremse reduzieren. Zur Realisierung radindividueller Druckmodulationen werden die Ventile dann einzeln oder gruppenweise im Multiplex-Betrieb angesteuert.

Aus der Minimierung auf lediglich ein Ventil pro Radbremse resultieren jedoch auch Herausforderungen, wie ein ungewollter Druckausgleich bei gleichzeitig geöffneten Ventilen. Eine Lösung basierend auf einem hochdynamischen Regelverhalten hierfür wird in der WO 2010/091883 A angegeben.

Die WO 2010/091883 A offenbart eine elektrohydraulische Bremsanlage mit einem Hauptzylinder und einem darin aufgenommenen Tandemkolben. Der Tandemkolben ist mittels eines elektromechanischen Aktuators betätigbar. Der elektromechanische Aktuator umfasst einen konzentrisch zum Tandemkolben angeordneten Elektromotor sowie eine Getriebeanordnung, die eine Rotationsbewegung des Elektromotors in eine Translationsbewegung des Kolbens umsetzt. Die Getriebeanordnung besteht aus einem Kugelgewindetrieb mit einer drehfest mit einem Rotor des Elektromotors gekoppelten Kugelgewindemutter und einer auf den Tandemkolben einwirkenden Kugelgewindespindel.

Die WO 2011/141158 A2 offenbart eine Hydraulikbaugruppe für eine Fahrzeug-Bremsanlage mit wenigstens zwei Bremskreisen und den Bremskreisen zugeordneten Radbremsen. Die Hydraulikbaugruppe umfasst einen Druckerzeuger zur fahrerunabhängigen Erzeugung eines zentralen Hydraulikdrucks für die Bremskreise zumindest bei einer vom Fahrer eingeleiteten Betriebsbremsung. Darüber hinaus ist wenigstens eine Druckeinstelleinrichtung zur bremskreisindividuellen Einstellung des vom Druckerzeuger fahrerunabhängig erzeugten zentralen Hydraulikdrucks vorgesehen.

Eine weitere elektrohydraulische Bremsanlage mit einem auf einen Hauptzylinder-Kolben wirkenden elektromechanischen Aktuator ist aus der WO 2012/152352 A bekannt. Diese Anlage kann in einem regenerativen Modus (Generatorbetrieb) arbeiten.

Die DE 10 2012 205340 A1 lehrt ein Verfahren sowie eine Vorrichtung zur Regelung eines elektrohydraulischen Bremssystems für Kraftfahrzeuge. Das elektrohydraulische Bremssystem weist zumindest eine Bremsdruckregel- oder Bremsdrucksteuerfunktion, mit einer mittels einer elektronischen Steuer- und Regeleinheit ansteuerbaren Druckbereitstellungseinrichtung, auf. Die Druckbereitstellungseinrichtung wird mittels eines Elektromotors angetrieben, wobei der Elektromotor zur Energieversorgung mit einem elektrischen Netz verbunden ist. Um eine schnelle Umkehr der Bewegungsrichtung des Elektromotors unter Einhaltung vorgegebener Grenzwerte für den aufgenommenen bzw. den in das elektrische Netz zurückgespeisten Strom des Elektromotors zu ermöglichen, werden ein von dem Elektromotor, insbesondere bei einem Reversiervorgang, in einem Generatorbetrieb in das elektrische Netz abgegebener Rückspeisestrom begrenzt und/oder ein vom Elektromotor aufgenommener Strom begrenzt.

### Kurzer Abriss

Es sind eine elektrohydraulische Kraftfahrzeug-Bremsanlage sowie ein Verfahren zum Betreiben einer solchen Bremsanlage anzugeben, die eine insbesondere aus Sicherheitsaspekten vorteilhafte Funktionalität aufweisen.

Gemäß einem Aspekt wird ein Verfahren angegeben für das Betreiben eines elektrohydraulischen Kraftfahrzeug-Bremsanlage, die einen Hauptzylinder, einen elektromechanischen Aktuator zur Erzeugung eines Hydraulikdrucks an mehreren Radbremsen und einen Satz elektrisch betätigbarer Ventilanordnungen aufweist, wobei der Satz Ventilanordnungen je eine erste Ventilanordnung zwischen dem Hauptzylinder und jeder Radbremse umfasst, um mittels des elektromechanischen Aktuators den für jede der Radbremse jeweils vorgesehenen Bremsdruck zu erzeugen. Das Verfahren umfasst die Schritte des Erzeugens eines Rückspeisestroms durch Betreiben eines Elektromotors des elektromechanischen Aktuators als Generator, und des Bestromens wenigstens eines elektrischen Verbrauchers mit dem Rückspeisestrom.

Die erste Ventilanordnung kann in einem Multiplexbetrieb ansteuerbar sein, wobei der Rückspeisestrom während des Multiplexbetriebs durch Betreiben des Elektromotors als Generator erzeugt wird.

Der Multiplex-Betrieb kann ein Zeitmultiplex-Betrieb sein. Dabei können allgemein einzelne Zeitschlitze vorgegeben sein. Einem einzelnen Zeitschlitz wiederum können eine oder mehrere der Ventilanordnungen zugeordnet sein, die während des entsprechenden Zeitschlitzes betätigt (beispielsweise durch ein- oder mehrfache Änderung des Schaltzustands von geöffnet nach geschlossen und/oder umgekehrt) werden. Gemäß einer Realisierung ist jeder der ersten Ventilanordnungen genau ein Zeitschlitz zugeordnet. Ein oder mehreren weiteren Ventilanordnungen können ein oder mehrere weitere Zeitschlitze zugeordnet sein.

Der Rückspeisestrom des Elektromotors des elektromechanischen Aktuators kann mit einem Abbremsen des Elektromotors, also einer Drehzahlreduzierung, zusammenhängen. Diese Drehzahlreduzierung kann in einem Zeitraum von 0,1 bis 50 msec (zum Beispiel von 0,5 bis 10 msec) ablaufen. Die Drehzahlreduzierung kann hierbei in einem Bereich zwischen 200 und 3000 min⁻¹ (zum Beispiel 500 bis 1500 min⁻¹) geschehen.

Gemäß einem Aspekt erfolgt das Bestromen des elektrischen Verbrauchers mit dem Rückspeisestrom selektiv, also nicht mit jeder Drehzahlverringerung des Elektromotors. So kann das Bestromen des elektrischen Verbrauchers auf Situationen begrenzt werden, in denen ein besonders hoher Rückspeisestrom zu erwarten ist. Der zu erwartende Rückspeisestrom kann anhand der zu erwartenden Drehzahlreduzierung ermittelt werden. Zusätzlich oder alternativ hierzu kann der erwartete Rückspeisestrom auch anhand des Zeitraumes, in dem die Drehzahlverringerung stattfindet, beurteilt werden.

Das Verfahren kann ferner den Schritt des Zuschaltens eines elektrischen Verbrauchers an den Elektromotor umfassen, um den vom Elektromotor im Generatorbetrieb erzeugten Rückspeisestrom ganz oder teilweise zu verbrauchen. Das zeitliche Zuschalten des Verbrauchers an den Elektromotor kann von der Höhe des (z. B. bestimmten) Rückspeisestromes abhängen.

Der vom Elektromotor als Generator erzeugte Rückspeisestrom kann auf Basis von Motorparametern, wie beispielsweise der zu erwartenden Drehzahlverringerung des Elektromotors, einer zu erwartenden Revision der Bewegungsrichtung des Elektromotors und/oder anhand des Zeitraums, in der die Drehzahlverringerung oder Umkehr der Bewegungsrichtung stattfindet, abgeschätzt bzw. vorausberechnet werden. Zusätzlich oder alternativ hierzu kann der durch den Elektromotor als Generator erzeugte Rückspeisestrom gemessen werden. Das Verfahren kann ferner den Schritt des Detektierens eines auf einem vom Elektromotor erzeugten Rückspeisestrom hinweisenden (z. B. gemessenen) Signals umfassen. Das Messsignal kann beispielsweise ein zum Rückspeisestrom proportionales Spannungssignal sein.
Das Verfahren kann ferner den Schritt des Vergleichens des Signals mit einem auf eine Stromobergrenze hinweisenden Referenzsignal umfassen. Das Referenzsignal kann ein auf eine vorgegebene Stromobergrenze hinweisendes Signal sein (z.B. Spannungssignal mit einer fest vorgegebenen Amplitude).

Das Zuschalten eines Verbrauchers kann vom Vergleich des Signals mit dem vorgegebenen Referenzsignal abhängen. Konkret kann ein Verbraucher immer dann zugeschaltet werden, wenn das Signal (beispielsweise die Amplitude oder der Betrag des Signals) das Referenzsignal (also die Amplitude oder den Betrag des Referenzsignals) überschreitet. Insbesondere kann der Verbraucher nur so lange zugeschaltet bleiben, wie das Signal das Referenzsignal übersteigt. Unterschreitet das Messsignal das Referenzsignal, so kann der Verbraucher wieder vom Elektromotor getrennt werden. Somit kann ein temporär begrenztes Zuschalten eines Verbrauchers ermöglicht werden, wobei der Verbraucher immer dann mit dem Elektromotor elektrisch gekoppelt ist, wenn der zu erwartende Rückspeisestrom eine vorgegebene Stromobergrenze überschreitet. Fällt der Rückspeisestrom unter den vorgegebenen Schwellenwert, so kann der Verbraucher vom Elektromotor elektrisch wieder entkoppelt werden. Auf diese Weise können insbesondere Rückspeisestromspitzen reduziert werden.

Gemäß einer Variante ist der elektromechanische Aktuator zur Betätigung des Hauptzylinder-Kolbens zur Hydraulikdruckerzeugung ausgebildet. Gemäß einer anderen Variante ist der elektromechanische Aktuator zur Betätigung einer zusätzlich zum Hauptzylinder vorgesehenen Zylinderanordnung zur Hydraulikdruckerzeugung vorgesehen. Diese Varianten können beispielsweise im Rahmen eines Brake-By-Wire (BBW)-Betriebs zum Einsatz kommen, in dem das Bremspedal vom Hauptzylinder-Kolben (normalerweise) mechanisch entkoppelt ist. Bei einer für den BBW-Betrieb ausgelegten Bremsanlage kann ein mechanischer Aktuator bei einer Notbremsung (etwa bei Ausfall einer BBW-Komponente) zur Betätigung des Kolbens zum Einsatz kommen. Dies wird auch als "push-through"-Betrieb bezeichnet.

Je nach Ausgestaltung der Fahrzeug-Bremsanlage kann das selektive Entkoppeln des Bremspedals vom Hauptzylinder-Kolben mittels einer Entkoppeleinrichtung zu unterschiedlichen Zwecken geschehen. Bei einer gemäß dem BBW-Prinzip ausgelegten Bremsanlage kann abgesehen von einem Notbremsbetrieb (in dem das Bremspedal über den mechanischen Aktuator mit dem Hauptzylinder-Kolben gekoppelt ist) eine ständige Entkopplung vorgesehen sein. Bei einer regenerativen Bremsanlage kann eine derartige Entkoppelung zumindest im Rahmen eines regenerativen Bremsbetriebs (Generatorbetrieb) erfolgen. Bei anderen Bremsanlagen können die Entkoppeleinrichtung sowie eine Simulationseinrichtung zur Bereitstellung eines Pedalrückwirkverhaltens auch völlig entfallen.

Zur Ansteuerung des elektromechanischen Aktuators sowie optionaler weiterer Komponenten der Fahrzeug-Bremsanlage (z. B. der ersten Ventilanordung und/oder des elektrischen Verbrauchs) kann die Bremsanlage geeignete Ansteuereinrichtungen aufweisen. Diese Ansteuereinrichtungen können elektrische, elektronische oder programmgesteuerte Baugruppen sowie Kombinationen hiervon umfassen. Beispielsweise können die Ansteuereinrichtungen in einem gemeinsamen Steuergerät oder in einem System aus getrennten Steuergeräten (Electronic Control Units, ECUs) bereitgestellt werden.

Der mit dem Rückspeisestrom bestromte elektrische Verbraucher kann ein beliebiger Verbraucher im Kraftfahrzeug sein. Beispielsweise könnte eine Heckscheibenheizung oder eine Sitzheizung mit dem Rückspeisestrom bestromt werden. Alternativ hierzu könnte der elektrische Verbraucher aber auch nur ein Widerstand oder eine Widerstandsschaltung sein, welcher den Rückspeisestrom oder einen Teil davon in thermische Energie umwandelt.

Zusätzlich oder alternativ hierzu kann der elektrische Verbraucher auch Teil der Bremsanlage sein. So könnte der elektrische Verbraucher von dem Elektromotor des elektromechanischen Aktuators gebildet werden. Im Elektromotor kann dann mittels des Rückspeisestroms ein Feldstrom erzeugt werden. Alternativ oder zusätzlich zum Elektromotor kann der elektrische Verbraucher von wenigstens einer Ventilanordnung aus dem Satz Ventilanordnungen umfasst sein. So könnte wenigstens eine der ersten Ventilanordnungen den elektrischen Verbraucher bilden. Zusätzlich oder alternativ hierzu kann der Satz Ventilanordnungen wenigstens eine zweite Ventilanordnung umfassen, die das Hinzuschalten einer hydraulischen Simulationseinrichtung für die Bereitstellung eines Pedalrückwirkverhaltens gestattet. In diesem Fall kann die zweite Ventilanordnung als elektrischer Verbraucher für den Rückspeisestrom fungieren.

Umfasst der wenigstens eine elektrische Verbraucher eine Ventilanordnung, kann diese mittels des Rückspeisestroms mit einem höheren Strom als im Normalbetrieb bestromt werden. Der Normalbetrieb kann dabei durch den Nominalstrom und/oder die Nominalspannung definiert sein, welche für eine Ventilbetätigung (Öffnen/oder Schließen) ausreichend ist. Die Ventilanordnung kann über eine Pulsweitmodulation mit dem Rückspeisestrom beaufschlagt werden. Alternativ hierzu kann die Ventilanordnung mit einem Konstantstrom bestromt werden.

Ebenfalls bereitgestellt wird ein Computerprogrammprodukt mit Programmcodemitteln zum Durchführen des hier vorgestellten Verfahrens, wenn das Computerprogrammprodukt auf wenigstens einem Prozessor abläuft. Das Computerprogrammprodukt kann von einem Kraftfahrzeug-Steuergerät oder Kraftfahrzeug-Steuergerätesystem umfasst sein.

Ferner wird eine elektrohydraulische Kraftfahrzeug-Bremsanlage angegeben mit einem Hauptzylinder, einem elektromechanischen Aktuator zur Erzeugung eines Hydraulikdrucks an mehreren Radbremsen, einem Satz elektrisch betätigbarer Ventilanordnungen mit je einer ersten Ventilanordnung zwischen dem Hauptzylinder und jeder Radbremse, um mittels des elektromechanischen Aktuators den für jede der Radbremsen jeweils vorgesehenen Bremsdruck zu erzeugen, und einem Steuergerät oder Steuergerätesystem, das ausgebildet ist, zum Erzeugen eines Rückspeisestroms durch Betreiben des Elektromotors des elektromechanischen Aktuators als Generator, und zum Bestromen wenigstens eines elektrischen Verbrauchers mit dem Rückspeisestrom.

Das Steuergerät oder Steuergerätsystem kann dazu ausgebildet sein, die ersten Ventilanordnungen (152, 154, 156, 158) im Multiplexbetrieb anzusteuern, wobei der Rückspeisestrom während des Multiplexbetriebs durch Betreiben des Elektromotors (134) als Generator erzeugt wird.

Das Steuergerät oder Steuergerätesystem kann ferner dazu ausgebildet sein, ein Signal zu detektieren, welches auf ein vom Elektromotor erzeugten Rückspeisestrom hinweist, und das Signal mit einem auf eine Stromobergrenze hinweisenden Referenzsignal zu vergleichen. Ferner kann das Steuergerät oder Steuergerätesystem dazu ausgebildet sein, den elektrischen Verbraucher an den Elektromotor dann zuzuschalten, wenn das Signal das Referenzsignal übersteigt.

Zur Erzeugung des Hydraulikdrucks kann der elektromechanische Aktuator auf einen im Hauptzylinder aufgenommenen Kolben einwirken. Alternativ hierzu ist es denkbar, dass der elektromechanische Aktuator auf einen Kolben einwirkt, der in einem zusätzlich zum Hauptzylinder vorgesehenen Zylinder vorgesehen ist. Der zusätzliche Zylinder kann dabei hydraulisch mit den Radbremsen gekoppelt sein oder werden.

Der zusätzliche Zylinder kann aber auch direkt mit dem Hauptzylinder hydraulisch gekoppelt sein. Der zusätzliche Zylinder kann dann von den Radbremsen fluidisch entkoppelt sein und ein Hydraulikdruck an den Radbremsen kann (lediglich) über den Hauptzylinder aufgebaut werden. In diesem Fall wird der in der zusätzlichen Zylinder-Kolben-Einrichtung mit Hilfe des elektromechanischen Aktuators erzeugte Hydraulikdruck vorzugsweise direkt auf den Hauptzylinder übertragen, um den im Hauptzylinder aufgenommene Kolben hydraulisch zu betätigen. Der von der zusätzlichen Zylinder-Kolben-Einrichtung bereitgestellte Hydraulikdruck kann zur hydraulischen Verstärkung im Bremsbetrieb verwendet werden. Der bereitgestellte Hydraulikdruck kann aber auch zur alleinigen Betätigung des im Hauptzylinder aufgenommenen Kolbens im Rahmen eines Brake-by-Wire-Bremsbetriebs verwendet werden.

### Kurze Beschreibung der Zeichnungen

Weitere Vorteile, Aspekte und Einzelheiten der hier vorgestellten hydraulischen Fahrzeug-Bremsanlage ergeben sich aus der nachfolgenden Beschreibung exemplarischer Ausführungsbeispiele sowie aus den Figuren. Es zeigen:
- Fig. 1: ein erstes Ausführungsbeispiel einer elektrohydraulischen Fahrzeug-Bremsanlage;
- Fig. 2: ein zweites Ausführungsbeispiel einer elektrohydraulischen Fahrzeug-Bremsanlage;
- Fig. 3: ein drittes Ausführungsbeispiel elektrohydraulischen Fahrzeug-Bremsanlage;
- Fig. 4: ein Ausführungsbeispiel eines Verfahrens zum Betreiben der elektrohydraulischen Fahrzeug-Bremsanlage nach einer der Fign. 1 bis 3;
- Fig. 5: ein schematisches Diagramm, welches das Auftreten von Rückspeisestromspitzen veranschaulicht.
- Fig. 6: eine Einrichtung zum Abbauen bzw. Reduzieren von Rückspeiseströmen; und
- Fig. 7: ein Ausführungsbeispiel eines Verfahrens zum Abbauen bzw. Reduzieren von Rückspeiseströmen.

### Detaillierte Beschreibung

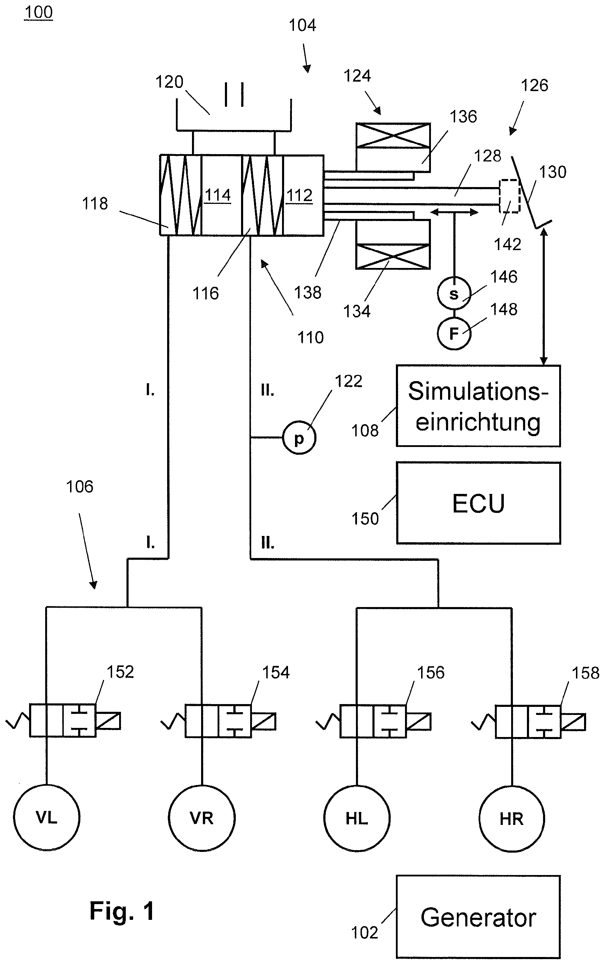

Fig. 1 zeigt ein erstes Ausführungsbeispiel einer hydraulischen Fahrzeug-Bremsanlage 100, die auf dem Brake-By-Wire (BBW)-Prinzip basiert. Die Bremsanlage 100 kann optional (z. B. bei Hybrid-Fahrzeugen) in einem regenerativen Modus betrieben werden. Zu diesen Zweck ist eine elektrische Maschine 102 vorgesehen, die eine Generatorfunktionalität bietet und selektiv mit Rädern und einem Energiespeicher, z.B. einer Batterie (nicht dargestellt), verbunden werden kann.

Wie in Fig. 1 veranschaulicht, umfasst die Bremsanlage 100 eine Hauptzylinder-Baugruppe 104, die an einer Fahrzeug-Spritzwand montiert werden kann. Eine hydraulische Steuereinheit (Hydraulic Control Unit, HCU) 106 der Bremsanlage 100 ist funktional zwischen der Hauptzylinder-Baugruppe 104 und vier Radbremsen VL, VR, HL und HR des Fahrzeugs angeordnet. Die HCU 106 ist als integrierte Baugruppe ausgebildet und umfasst eine Vielzahl von hydraulischen Einzelkomponenten sowie mehrere Fluideinlässe und Fluidauslässe. Ferner ist eine nur schematisch dargestellte Simulationseinrichtung 108 zum Bereitstellen eines Pedalrückwirkungsverhaltens im Betriebsbremsbetrieb vorgesehen. Die Simulationseinrichtung 108 kann auf einem mechanischen oder hydraulischen Prinzip basieren. Im zuletzt genannten Fall kann die Simulationseinrichtung 108 an die HCU 106 angeschlossen sein.

Die Hauptzylinder-Baugruppe 104 weist einen Hauptzylinder 110 mit einem darin verschieblich aufgenommenen Kolben auf. Der Kolben ist im Ausführungsbeispiel als Tandemkolben mit einem Primärkolben 112 und einem Sekundärkolben 114 ausgebildet und definiert im Hauptzylinder 110 zwei voneinander getrennte Hydraulikkammern 116, 118. Die beiden Hydraulikkammern 116, 118 des Hauptzylinders 110 sind zur Versorgung mit Hydraulikfluid über jeweils einen Anschluss mit einem drucklosen Hydraulikfluid-Reservoir 120 verbunden. Jede der beiden Hydraulikkammern 116, 116 ist ferner mit der HCU 106 gekoppelt und definiert jeweils einen Bremskreis I. und II. Im Ausführungsbeispiel ist für den Bremskreis I. ein Hydraulikdrucksensor 122 vorgesehen, der auch in die HCU 106 integriert werden könnte.

Die Hydraulik-Baugruppe 104 umfasst ferner einen elektromechanischen Aktuator (d.h. ein elektromechanisches Stellglied) 124 sowie einen mechanischen Aktuator (d.h. ein mechanisches Stellglied) 126. Sowohl der elektromechanische Aktuator 124 als auch der mechanische Aktuator 126 ermöglichen eine Betätigung des Hauptzylinder-Kolbens und wirken dazu auf eine eingangsseitige Stirnfläche dieses Kolbens, genauer gesagt des Primärkolbens 112, ein. Die Aktuatoren 124, 126 sind derart ausgebildet, dass sie unabhängig voneinander (und getrennt oder gemeinsam) den Hauptzylinder-Kolben zu betätigen vermögen.

Der mechanische Aktuator 126 besitzt ein Kraftübertragungselement 128, das stangenförmig ausgebildet ist und unmittelbar auf die eingangsseitige Stirnfläche des Primär-Kolbens 112 einzuwirken vermag. Wie in Fig. 1 gezeigt, ist das Kraftübertragungselement 128 mit einem Bremspedal 130 gekoppelt. Es versteht sich, dass der mechanische Aktuator 126 weitere Komponenten umfassen kann, die funktional zwischen dem Bremspedal 130 und dem Hauptzylinder 110 angeordnet sind. Derartige weitere Komponenten können sowohl mechanischer als auch hydraulischer Natur sein. Im zuletzt genannten Fall ist der Aktuator 126 als hydraulisch-mechanischer Aktuator 126 ausgebildet.

Der elektromechanische Aktuator 124 weist einen Elektromotor 134 sowie ein dem Elektromotor 134 abtriebsseitig nachfolgendes Getriebe 136, 138 auf. Im Ausführungsbeispiel ist das Getriebe eine Anordnung aus einer drehbar gelagerten Mutter 136 und einer mit der Mutter 136 (z.B. über Wälzkörper wie Kugeln) in Eingriff stehenden und in axialer Richtung beweglichen Spindel 138. In anderen Ausführungsbeispielen können Zahnstangengetriebe oder andere Getriebetypen zum Einsatz gelangen.

Der Elektromotor 134 besitzt im vorliegenden Ausführungsbeispiel eine zylindrische Bauform und erstreckt sich konzentrisch zum Kraftübertragungselement 128 des mechanischen Aktuators 126. Genauer gesagt ist der Elektromotor 134 radial außen bezüglich des Kraftübertragungselements 128 angeordnet. Ein Rotor (nicht dargestellt) des Elektromotors 134 ist drehfest mit der Getriebemutter 136 gekoppelt, um diese in Drehung zu versetzen. Eine Drehbewegung der Mutter 136 überträgt sich derart auf die Spindel 138, dass eine axiale Verschiebung der Spindel 138 resultiert. Die in Fig. 1 linke Stirnseite der Spindel 138 kann dabei (ggf. über ein Zwischenglied) in Anlage an die in Fig. 1 rechte Stirnseite des Primärkolbens 112 gelangen und in Folge dessen den Primärkolben 112 (zusammen mit dem Sekundärkolben 114) in Fig. 1 nach links verschieben. Ferner lässt sich die Kolbenanordnung 112, 114 auch von dem sich durch die (als Hohlkörper ausgebildete) Spindel 138 erstreckenden Kraftübertragungselement 128 des mechanischen Aktuators 126 in Fig. 1 nach links verschieben. Ein Verschieben der Kolbenanordnung 112, 114 in Fig. 1 nach rechts wird mittels des in den Hydraulikkammern 116, 118 herrschenden Hydraulikdrucks (bei Loslassen des Bremspedals 130 und ggf. bei motorischem Verschieben der Spindel 138 nach rechts) bewerkstelligt.

In der in Fig. 1 gezeigten Variante der Hauptzylinder-Baugruppe 100 ist der elektromechanische Aktutor 124 derart angeordnet, dass er unmittelbar auf den Kolben (genauer gesagt auf den Primärkolben 112) des Hauptzylinders 110 zum Aufbau eines Hydraulikdrucks an den Radbremsen einwirken kann. Mit anderen Worten wird der Kolben 112 des Hauptzylinders unmittelbar durch den elektromechanischen Aktuator 124 mechanisch verschoben. In einer alternativen Ausgestaltung der Hauptzylinder-Baugruppe 100 kann der Kolben 112 des Hauptzylinders 110 mit Hilfe des elektromechanischen Aktuators 124 hydraulisch betätigt werden (in Fig. 1 nicht dargestellt). In diesem Fall kann der Hauptzylinder 110 mit einer weiteren, mit dem elektromechanischen Aktuator 124 zusammenwirkenden Zylinder-Kolben-Einrichtung fluidisch gekoppelt sein. Konkret kann die mit dem elektromechanischen Aktuator 124 gekoppelte Zylinder-Kolben-Einrichtung auslassseitig mit dem Primärkolben 112 des Hauptzylinders 110 beispielsweise derart fluidisch gekoppelt sein, dass ein in der Zylinder-Kolben-Einrichtung erzeugter Hydraulikdruck unmittelbar auf den Primärkolben wirkt und somit zu einer Verschiebung des Primärkolbens 112 im Hauptzylinder 110 führt. Der Primärkolben 112 wird dann in einer Realisierung aufgrund des einwirkenden Hydraulikdruckes so weit im Hauptzylinder 110 verschoben (nach links in Fig. 1), bis der in den Hauptzylinder-Kammern 116, 118 erzeugte Hydraulikdruck dem in der zusätzlichen Zylinder-Kolben-Einrichtung erzeugten Hydraulikdruck entspricht.

Wie in Fig. 1 gezeigt, ist eine Entkoppeleinrichtung 142 funktional zwischen dem Bremspedal 130 und dem Kraftübertragungselement 128 vorgesehen. Die Entkoppeleinrichtung 142 ermöglicht ein selektives Entkoppeln des Bremspedals 130 von der Kolbenanordnung 112, 114 im Hauptzylinder 110, beispielsweise durch Unterbrechung eines Kraftübertragungswegs. Nachfolgend werden die Funktionsweisen der Entkoppeleinrichtung 142 und der Simulationseinrichtung 108 näher erläutert. In diesem Zusammenhang ist darauf hinzuweisen, dass die in Fig. 1 dargestellt Bremsanlage 100 auf dem Prinzip des Brake-By-Wire (BBW) basiert. Dies bedeutet, dass im Rahmen einer normalen Betriebsbremsung sowohl die Entkoppeleinrichtung 142 als auch die Simulationseinrichtung 108 aktiviert sind. Demgemäß ist das Bremspedal 130 vom Kraftübertragungselement 128 (und damit von der Kolbenanordnung 112, 114 im Hauptzylinder 110) entkoppelt, und eine Betätigung der Kolbenanordnung 112, 114 kann ausschließlich über den elektromechanischen Aktuator 124 erfolgen.

Das gewohnte Pedalrückwirkverhalten wird in diesem Fall von der mit dem Bremspedal 130 gekoppelten Simulationseinrichtung 108 bereitgestellt.

Im Rahmen der Betriebsbremsung übernimmt damit der elektromechanische Aktuator 124 die Bremskrafterzeugungsfunktion. Eine durch Niedertreten des Bremspedals 130 angeforderte Bremskraft wird dabei dadurch erzeugt, dass mittels des Elektromotors 134 die Spindel 138 in Fig. 1 nach links verschoben und dadurch auch der Primärkolben 112 und der Sekundär-Kolben 114 des Hauptzylinders 110 nach links bewegt werden. Auf diese Weise wird Hydraulikfluid aus den Hydraulikkammern 116, 118 über die HCU 106 zu den Radbremsen VL, VR, HL und HR gefördert.

Die Höhe der daraus resultierenden Bremskraft der Radbremsen VL, VR, HL und HR wird in Abhängigkeit einer sensorisch erfassten Bremspedalbetätigung eingestellt. Zu diesem Zweck sind ein Wegsensor 146 und ein Kraftsensor 148 vorgesehen, deren Ausgangssignale von einem den Elektromotor 134 ansteuernden Steuergerät (Electronic Control Unit, ECU) 150 ausgewertet werden. Der Wegsensor 146 erfasst einen mit einer Betätigung des Bremspedals 130 in Zusammenhang stehenden Betätigungsweg, während der Kraftsensor 148 eine damit in Zusammenhang stehende Betätigungskraft erfasst. In Abhängigkeit von den Ausgangssignalen der Sensoren 146, 148 (sowie ggf. des Drucksensors 122) wird vom Steuergerät 150 ein Ansteuersignal für den Elektromotor 134 erzeugt.

Nachdem die Vorgänge bei einer Betriebsbremsung näher erläutert wurden, wird jetzt kurz der Notbremsbetrieb geschildert. Der Notbremsbetrieb ist beispielsweise die Folge des Ausfalls der Fahrzeugbatterie oder einer Komponente des elektromechanischen Aktuators 124. Eine Deaktivierung der Entkoppeleinrichtung 142 (und der Simulationseinrichtung 108) im Notbremsbetrieb ermöglicht eine direkte Koppelung des Bremspedals 130 mit dem Hauptzylinder 110, nämlich über das Kraftübertragungselement 128 ("push-through"-Modus). Die Notbremsung wird eingeleitet durch Niedertreten des Bremspedals 130. Die Bremspedalbetätigung überträgt sich dann über das Kraftübertragungselement 128 auf den Hauptzylinder 110. In Folge dessen verschiebt sich die Kolbenanordnung 112, 114 in Fig. 1 nach links. Dadurch wird zur Bremskrafterzeugung Hydraulikfluid aus den Hydraulikkammern 116, 118 des Hauptzylinders 110 über die HCU 106 zu den Radbremsen VL, VR, HL und HR gefördert.

Bei der Ausführungsform gemäß Fig. 1 können in der HCU 106 die speziellen Ventile für den Fahrdynamikregelbetrieb (z.B. den ASR- und ESP-Betrieb) bis auf vier Ventile 152, 154, 156, 158 zwischen dem Hauptzylinder 110 und den Radbremsen VL, VR, HL und HR entfallen. Bei dieser Ausführungsform der HCU 106 kann also auf die aus der WO 2010/091883 A oder WO 2011/141158 A (vgl. Fig. 15) bekannte Ventilanordnung mit lediglich vier Ventilen 152, 154, 156, 158 (und die entsprechende Ansteuerung) zurückgegriffen werden.

Die Hydraulikdruckmodulation im Regelbetrieb erfolgt mittels des elektromechanischen Aktuators 124. Mit anderen Worten wird der elektromechanische Aktuator 124 nicht nur zur Bremskrafterzeugung im Rahmen einer Betriebsbremsung, sondern auch beispielsweise zum Zweck der Fahrdynamikregelung (also z.B. im ABS- und/oder ASR- und/oder ESP-Regelbetrieb) angesteuert. Zusammen mit der Ansteuerung des elektromechanischen Aktuators 124 erfolgt eine radindividuelle oder radgruppenindividuelle Ansteuerung der Ventile 152, 154, 156, 158 in einem zeitlichen Multiplex-Betrieb. Für den Multiplex-Betrieb kann dann jedem der Ventile 152, 154, 156, 158 ein eigener Zeitschlitz zugeordnet sein, in dem das betreffende Ventil angesteuert (zum Beispiel geöffnet und/oder geschlossen) werden kann. In der in Fig. 1 gezeigten Implementierung sind zwischen den Radbremsen VL, VR, HL und HR und dem Hauptzylinder 110 keine weiteren Ventile für Fahrdynamikregelzwecke vorhanden.

Im Multiplex-Betrieb können beispielsweise zunächst mehrere oder alle der Ventile 152, 154, 156, 158 geöffnet sein und gleichzeitig mittels des elektromechanischen Aktuators 124 ein Hydraulikdruck an mehreren oder allen zugeordneten Radbremsen VL, VR, HL und HR aufgebaut werden. Bei Erreichen eines radindividuellen Zieldrucks schließt dann das entsprechende Ventil 152, 154, 156, 158, während eines oder mehrere weitere Ventile 152, 154, 156, 158 so lange weiterhin geöffnet bleiben, bis auch dort der jeweilige Zieldruck erreicht ist. Die vier Ventile 152, 154, 156, 158 werden daher im Multiplex-Betrieb individuell pro Rad oder Radgruppe in Abhängigkeit des jeweiligen Zieldrucks zeitschlitz-synchron geöffnet und geschlossen.

Gemäß einer Ausführung sind die Ventile 152, 154, 156, 158 als 2/2-Wege-Ventile realisiert und beispielsweise als nichtregelbare Absperrventile ausgebildet. In diesem Fall kann daher kein Öffnungsquerschnitt eingestellt werden, wie es beispielsweise bei Proportionalventilen der Fall wäre. In einer anderen Ausführung sind die Ventile 152, 154, 156, 158 als Proportionalventile mit einstellbarem Öffnungsquerschnitt realisiert.

Zur zeitschlitz-synchronen Hydraulikdruckeinstellung im Multiplex-Betrieb muss der Elektromotor 134 immer wieder sehr schnell hochgefahren (zum Beispiel aus dem Stillstand heraus beschleunigt) und abgebremst (zum Beispiel bis zum Stillstand verzögert) werden. Sowohl das Hochfahren als auch das Reduzieren der Motordrehzahl erfolgt hierbei aufgrund der kurzen Zeitschlitze (typischerweise im Millisekunden-Bereich) in äußerst kurzen Zeiträumen. So muss der Motor häufig innerhalb von 2 bis 3 msec die Drehzahl um 1000 min⁻¹ oder mehr reduzieren. Im Rahmen einer derart schnellen Drehzahlreduzierung wirkt der Elektromotor 134 wie ein Generator, der Strom erzeugt (also ähnlich wie der Generator 102). Da der Elektromotor 124 mit dem Fahrzeugbordnetz verbunden ist, wird der im Generatorbetrieb des Elektromotors 134 erzeugte Strom in das Bordnetz eingespeist ("Rückspeisestrom").

Der Rückspeisestrom kann zu Spannungsspitzen im Bordnetz führen, die für andere an das Bordnetz angeschlossene Verbraucher schädlich sein können. Zu solchen Verbrauchern zählt beispielsweise das Steuergerät 150 oder andere Steuergeräte, die mitunter sicherheitsrelevante Funktionalitäten implementieren. Beispielsweise sind manche Steuergeräte dahingehend programmiert, dass sie in einen Reset gehen, wenn die Spannung am Kabelbaum über 16 Volt ansteigt. Dieser Reset erfolgt unabhängig davon, wie lange die erhöhte Spannung anliegt. Auch die äußerst kurzzeitigen Rückspeiseströme im Generatorbetrieb des Elektromotors 134 können daher einen solchen Reset bewirken. Aus diesem Grund sind viele Fahrzeughersteller dazu übergegangen, den maximal erlaubten Rückspeisestrom auf einen gewissen Wert (zum Beispiel -15 A) zu beschränken.

Zur Beschränkung des Rückspeisestroms könnte der Elektromotor 134 natürlich langsamer abgebremst werden, aber andererseits ergibt sich im Multiplex-Betrieb oftmals das Erfordernis, den Hydraulikdruckaufbau- oder -abbau an den Radbremsen VL, VR, HL und HR sequentiell, also nacheinander, in den Ventilen 152, 154, 156, 158 zugeordneten Zeitschlitzen durchzuführen. Die systembedingte Zeitdauer der Zeitschlitze und damit die maximal verfügbare Zeit für das Abbremsen des Elektromotors 134 lässt sich jedoch nicht beliebig verlängern. Dies bedeutet, dass die Rückspeisestromspitzen nicht beliebig reduziert werden können.

Aus diesem Grund wird vorgeschlagen, das Auftreten höherer Rückspeiseströme in Kauf zu nehmen, diese aber nicht unkontrolliert ins Bordnetz einzuspeisen. Es wird vielmehr vorgeschlagen, während des Auftretens derartiger Rückspeiseströme im Rahmen des Multiplex-Betriebs einen elektrischen Verbraucher des Kraftfahrzeugs damit zu bestromen. Da die Rückspeisestromspitzen im Millisekunden-Bereich auftreten, muss auch das Bestromen des elektrischen Verbrauchers, beispielsweise einer Heckscheibenheizung oder einer Sitzheizung, nur im Millisekunden-Bereich erfolgen.

Gemäß einer Variante ist vorgesehen, Rückspeisestromspitzen intern in der Bremsanlage 100 abzubauen. Für den Abbau von Rückspeisestromspitzen können beispielsweise die Multiplex-Ventile 154, 154, 156, 158 herangezogen werden. Im Multiplex-Betrieb ist typischerweise während eines bestimmten Zeitschlitzes lediglich das diesem Zeitschlitz zugeordnete Ventil, beispielsweise das Ventil 152 geöffnet, um an der zugeordneten Radbremse VL mittels des elektromechanischen Aktuators 124 den Hydraulikdruck einzustellen. Die verbleibenden Ventile 154, 156, 158 sind hingegen geschlossen. Zum Schließen der Ventile 154, 156, 158 müssen diese bestromt werden. Daher können während des Multiplex-Betriebs diejenigen Multiplex-Ventile 154, 156, 158, die geschlossen und damit bestromt sind, zusätzlich mittels des Rückspeisestroms beaufschlagt werden. Der Schaltzustand der Ventile ändert sich dadurch nicht, es wird lediglich die elektromagnetische Zuhaltekraft erhöht, und eine in dem Ventil verbaute Spule erzeugt mehr Wärme.

Die jeweilige Spulentemperatur kann modelliert oder überwacht werden, um eine Beschädigung des Ventils zu vermeiden. So kann der Rückspeisestrom zyklisch (zum Beispiel zeitschlitz-synchron) den jeweils geschlossenen Ventilen 152, 154, 156, 158 zugeführt werden, um deren thermische Belastung zu reduzieren. Allgemein kann das Zuführen des Rückspeisestroms über Pulsweiten-Modulation (PWM) erfolgen. Zusätzlich oder alternativ hierzu können dann, wenn eines der Ventile 152, 154, 156, 158 seine Temperaturgrenze erreicht (oder aus Funktionsgründen mit weniger Strom beaufschlagt werden soll, andere Ventile (in Fig. 1 nicht dargestellt) oder andere elektrische Verbraucher (zum Beispiel die bereits erwähnte Heckscheibenheizung) individuell und bedarfsorientiert mit dem Rückspeisestrom bestromt werden.

Es ist darauf hinzuweisen, dass auch der Elektromotor 134 selbst als elektrischer Verbraucher für den Rückspeisestrom verwendet werden kann. So kann der Rückspeisestrom während der Drehzahlreduzierung eines Rotors des Elektromotors 134 dem Elektromotor 134 wieder als Feldstrom zugeführt werden. Der Feldstrom kann drehmomentneutral und genauso groß sein, wie der für einen über einen Stromgrenzwert hinausgehenden Anteil des Generatorstroms. Der Rückspeisestrom kann auf diese Weise innerhalb des elektromechanischen Aktuators 124 in Wärme umgewandelt werden.

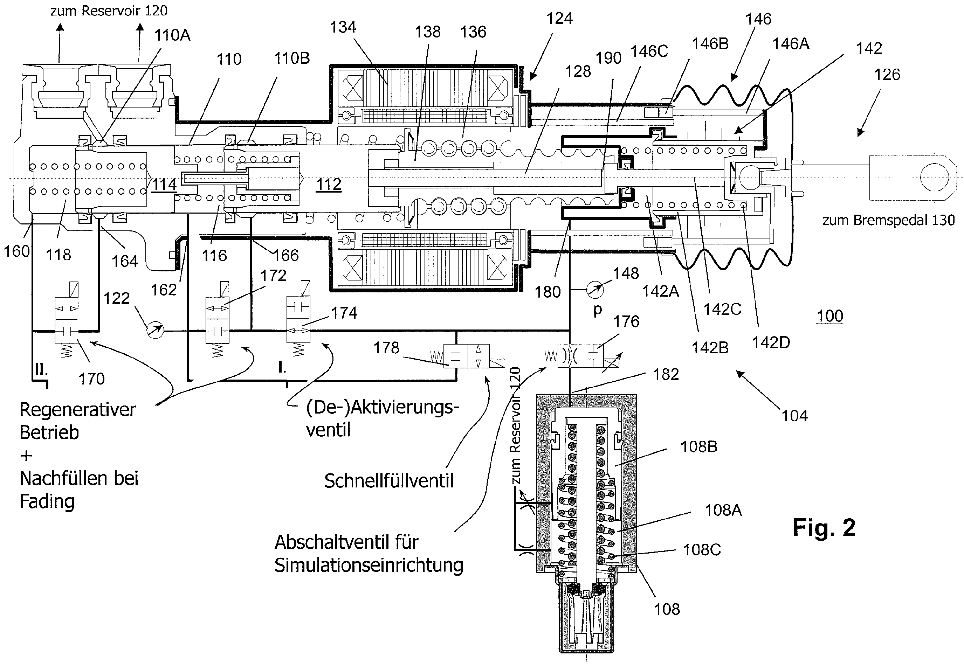

Fig. 2 zeigt ein detaillierteres Ausführungsbeispiel einer Fahrzeug-Bremsanlage 100, welche auf dem im Zusammenhang mit dem schematischen Ausführungsbeispiel der Fig. 1 erläuterten Funktionsprinzip basiert. Gleiche oder ähnliche Elemente wurden dabei mit den gleichen Bezugszeichen wie in Fig. 1 versehen, und auf deren Erläuterung wird nachfolgend verzichtet. Der Klarheit halber wurden die ECU, die Radbremsen, die den Radbremsen zugeordneten Ventileinheiten (d.h. die Multiplex-Ventile 152, 154, 156, 158 in Fig.1) der HCU und der Generator für den regenerativen Bremsbetrieb nicht dargestellt.

Auch die in Fig. 2 veranschaulichte Fahrzeug-Bremsanlage 100 umfasst zwei Bremskreise I. und II., wobei zwei Hydraulikkammern 116, 118 eines Hauptzylinders 110 jeweils wiederum genau einem Bremskreis I., II. zugeordnet sind. Der Hauptzylinder 110 besitzt pro Bremskreis I., II. zwei Anschlüsse. Die beiden Hydraulikkammern 116, 118 münden dabei jeweils in einen ersten Anschluss 160, 162, über den Hydraulikfluid aus der jeweiligen Kammer 116, 118 in den zugeordneten Bremskreis I., II. gefördert werden kann. Ferner kann jeder der Bremskreise I. und II. über jeweils einen zweiten Anschluss 164, 166, der in eine entsprechende Ringkammer 110A, 110B im Hauptzylinder 110 mündet, mit dem in Fig. 2 nicht dargestellten drucklosen Hydraulikfluid-Reservoir (Bezugszeichen 120 in Fig. 1) verbunden werden.

Zwischen dem jeweils ersten Anschluss 160, 162 und dem jeweils zweiten Anschluss 164, 166 des Hauptzylinders 110 ist jeweils ein Ventil 170, 172 vorgesehen, das im Ausführungsbeispiel als ein 2/2-Wege-Ventil realisiert ist. Mittels der Ventile 170, 172 können die ersten und zweiten Anschlüsse 160, 162, 164, 166 selektiv miteinander verbunden werden. Dies entspricht einem "hydraulischen Kurzschluss" zwischen dem Hauptzylinder 110 einerseits und, auf der anderen Seite, dem drucklosen Hydraulikfluidreservoir (welches dann über die Ringkammern 110A, 110B mit den Hydraulikkammern 116, 118 verbunden wird). In diesem Zustand können die Kolben 112, 114 im Hauptzylinder 110 im Wesentlichen widerstandsfrei durch den elektromechanischen Aktuator 124 oder den mechanischen Aktuator 126 verschoben werden ("Leerwegfreischaltung"). Die beiden Ventile 170, 172 ermöglichen so beispielsweise einen regenerativen Bremsbetrieb (Generatorbetrieb). Hier wird das bei einer Förderbewegung im Hauptzylinder 110 aus den Hydraulikkammern 116, 118 verdrängte Hydraulikfluid dann nicht zu den Radbremsen geleitet, sondern zum drucklosen Hydraulikfluidreservoir, ohne dass es zu einem (im regenerativen Bremsbetrieb in der Regel unerwünschten) Hydraulikdruckaufbau an den Radbremsen käme. Eine Bremswirkung wird im regenerativen Bremsbetrieb dann durch den Generator (vgl. Bezugszeichen 102 in Fig. 1) erzielt.

Es ist darauf hinzuweisen, dass der regenerative Bremsbetrieb achsweise implementiert sein kann. Daher kann im Fall einer achsbezogenen Bremskreisaufteilung im regenerativen Bremsbetrieb eines der beiden Ventile 170, 172 geschlossen und das andere geöffnet sein. Am den Radbremsen des geschlossenen Ventils 170, 172 wird dann in herkömmlicher Weise Hydraulikdruck aufgebaut, während an der den Radbremsen des geschlossenen Ventils 170, 172 zugeordneten Fahrzeugachse die Bremswirkung des Generators 102 ausgenutzt wird.

Die beiden Ventile 170, 172 ermöglichen ferner den Abbau von Hydraulikdruck an den Radbremsen. Ein solcher Druckabbau kann bei Ausfall (z.B. einer Blockierung) des elektromechanischen Aktuators 124 erwünscht sein oder im Fahrdynamikregelbetrieb, um einen Rückhub des elektromechanischen Aktuators 124 zu vermeiden (z.B. um eine Rückwirkung auf das Bremspedal zu vermeiden). Auch zum Druckabbau werden die beiden Ventile 170, 172 in ihre geöffnete Stellung übergeführt, wodurch Hydraulikfluid aus den Radbremsen über die Ringkammern 110A, 110B im Hauptzylinder 110 in das Hydraulikfluid-Reservoir zurückströmen kann.

Schließlich ermöglichen die Ventile 170, 172 auch noch ein Nachfüllen der Hydraulikkammern 116, 118. Ein solches Nachfüllen kann während eines laufenden Bremsvorgangs erforderlich werden (z.B. aufgrund von so genanntem Bremsen-"Fading"). Zum Nachfüllen werden die Radbremsen über zugeordnete Ventile der HCU (in Fig. 2 nicht dargestellt) fluidisch von den Hydraulikkammern 116, 118 getrennt. Der an den Radbremsen herrschende Hydraulikdruck wird also "eingesperrt". Daraufhin werden die Ventile 170, 172 geöffnet. Bei einem anschließenden Rückhub der im Hauptzylinder 110 vorgesehen Kolben 112, 114 (in Fig. 2 nach rechts) wird dann Hydraulikfluid aus dem drucklosen Reservoir in die Kammern 116, 118 gesaugt. Schließlich können die Ventile 170, 172 wieder geschlossen und die Hydraulikverbindungen zu den Radbremsen wieder geöffnet werden. Bei einem nachfolgenden Förderhub der Kolben 112, 114 (in Fig. 2 nach links) kann dann der vormals "eingesperrte" Hydraulikdruck weiter erhöht werden.

Wie in Fig. 2 gezeigt, basieren im vorliegenden Ausführungsbeispiel sowohl eine Simulationseinrichtung 108 als auch eine Entkoppeleinrichtung 142 auf einem hydraulischen Prinzip. Beide Einrichtungen 108, 142 umfassen jeweils einen Zylinder 108A, 142A zur Aufnahme von Hydraulikfluid sowie einen im jeweiligen Zylinder 108A, 142A aufgenommenen Kolben 108B, 142B. Der Kolben 142B der Entkoppeleinrichtung ist 142 ist mechanisch mit einem in Fig. 2 nicht dargestellten Bremspedal (vgl. Bezugszeichen 130 in Fig. 1) gekoppelt. Ferner besitzt der Kolben 142B einen sich durch den Zylinder 142A in axialer Richtung hindurch erstreckenden Fortsatz 142C. Der Kolbenfortsatz 142C verläuft koaxial zu einem Kraftübertragungselement 128 für den Primärkolben 112 und ist diesem in Betätigungsrichtung des Bremspedals vorgelagert.

Jeder der beiden Kolben 108B, 142B wird von einem elastischen Element 108C, 142D (hier jeweils einer Schraubenfeder) in seine Ausgangsstellung vorgespannt. Die Kennlinie des elastischen Elements 108C der Simulationseinrichtung 108 definiert hierbei das gewünschte Pedalrückwirkverhalten.

Wie ferner in Fig. 2 gezeigt, umfasst die Fahrzeug-Bremsanlage 100 im vorliegenden Ausführungsbeispiel drei weitere Ventile 174, 176, 178, die hier als 2/2-Wege-Ventile realisiert sind. Es versteht sich, dass einzelne oder alle dieser drei Ventile 174, 176, 178 bei anderen Ausführungsformen, bei denen die entsprechenden Funktionalitäten nicht erforderlich sind, entfallen können. Ferner versteht sich, dass alle diese Ventile Teil eines einzigen HCU-Blocks (vgl. Bezugszeichen 106 in Fig. 1) sein können.

Das erste Ventil 174 ist einerseits zwischen der Entkoppeleinrichtung 142 (über einen im Zylinder 142A vorgesehenen Anschluss 180) sowie der Simulationseinrichtung 108 (über einen im Zylinder 108A vorgesehenen Anschluss 182) und andererseits dem drucklosen Hydraulikfluidreservoir (über den Anschluss 166 des Hauptzylinders 110) vorgesehen. Dem Anschluss 182 des Zylinders 108A ist das zweite Ventil 176 vorgeschaltet, das in seiner Durchlass-Stellung eine Drosselcharakteristik aufweist. Das dritte Ventil 178 schließlich ist zwischen der Hydraulikkammer 116 (über den Anschluss 116) und dem Bremskreis I. einerseits und dem Zylinder 142A der Entkoppeleinrichtung 142 (über den Anschluss 180) andererseits vorgesehen.

Das erste Ventil 174 ermöglicht eine selektive Aktivierung und Deaktivierung der Entkoppeleinrichtung 142 (und indirekt auch der Simulationseinrichtung 108). Befindet sich das Ventil 174 in seiner geöffneten Stellung, ist die der Zylinder 142A der Entkoppeleinrichtung 142 hydraulisch mit dem drucklosen Hydraulikreservoir verbunden. In dieser Stellung ist die Entkoppeleinrichtung 142 entsprechend dem Notbremsbetrieb deaktiviert. Ferner ist auch die Simulationseinrichtung 108 deaktiviert.

Das Öffnen des Ventils 174 bewirkt, dass bei Verschieben des Kolbens 142B (infolge einer Betätigung des Bremspedals) das im Zylinder 142A aufgenommene Hydraulik-fluid weitgehend widerstandsfrei in das drucklose Hydraulikfluidreservoir gefördert werden kann. Dieser Vorgang ist im Wesentlichen unabhängig von der Stellung des Ventils 176, da dieses auch in seiner geöffneten Stellung eine signifikante Drosselwirkung besitzt. Somit ist bei geöffneter Stellung des Ventils 174 auf indirekte Weise auch die Simulationseinrichtung 108 deaktiviert.

Bei einer Bremspedalbetätigung im geöffneten Zustand des Ventils 174 überwindet der Kolbenfortsatz 142C einen Spalt 190 hin zum Kraftübertragungselement 128 und gelangt infolgedessen in Anlage an das Kraftübertragungselement 128. Das Kraftübertragungselement 128 wird nach Überwindung des Spalts 190 von der Verschiebung des Kolbenfortsatzes 142C erfasst und betätigt daraufhin den Primärkolben 112 (sowie - indirekt - den Sekundärkolben 114) im Hauptbremszylinder 110. Dies entspricht der bereits im Zusammenhang mit der Fig. 1 erläuterten direkten Kopplung von Bremspedal und Hauptzylinderkolben zum Hydraulikdruckaufbau in den Bremskreisen I., II. im Notbremsbetrieb.

Bei geschlossenem Ventil 174 (und geschlossenem Ventil 178) ist die Entkoppeleinrichtung 142 hingegen aktiviert. Dies entspricht dem Betriebsbremsbetrieb. Dabei wird bei einer Betätigung des Bremspedals Hydraulikfluid aus dem Zylinder 142A in den Zylinder 108A der Simulationseinrichtung 108 gefördert. Auf diese Weise wird der Simulator-Kolben 108B gegen die vom elastischen Element 108C bereit gestellte Gegenkraft verschoben, so dass sich das gewohnte Pedalrückwirkverhalten einstellt. Gleichzeitig wird der Spalt 190 zwischen dem Kolbenfortsatz 142C und dem Kraftübertragungselement 128 weiter aufrechterhalten. Dadurch ist das Bremspedal vom Hauptzylinder mechanisch entkoppelt.

Im vorliegenden Ausführungsbeispiel erfolgt die Aufrechterhaltung des Spalts 190 dadurch, dass mittels des elektromechanischen Aktuators 124 der Primärkolben 112 wenigstens so schnell in Fig. 2 nach links bewegt wird, wie sich der Kolben 142B aufgrund der Bremspedalbetätigung nach links bewegt. Da das Kraftübertragungselement 128 mechanisch oder anderweitig (z.B. magnetisch) mit dem Primärkolben 112 gekoppelt ist, bewegt sich das Kraftübertragungselement 128 zusammen mit dem Primärkolben 112 bei dessen Betätigung mittels der Getriebespindel 138. Diese Mitnahme des Kraftübertragungselements 128 gestattet die Aufrechterhaltung des Spalts 190.

Die Aufrechterhaltung des Spalts 190 im Betriebsbremsbetrieb erfordert eine präzise Erfassung des vom Kolben 142B zurückgelegten Wegs (und damit des Pedalwegs). Zu diesem Zweck ist ein auf einem magnetischen Prinzip basierender Wegsensor 146 vorgesehen. Der Wegsensor 146 umfasst einen starr mit dem Kolben 142B gekoppelten Stößel 146A, an dessen Ende ein Magnetelement 146B angebracht ist. Die Bewegung des Magnetelements 146B (d.h. der vom Stößel 146B bzw. Kolben 142B zurückgelegte Weg) wird mittels eines Hallsensors 146C erfasst. Ein Ausgangssignal des Hallsensors 146C wird von einer in Fig. 2 nicht gezeigten Steuereinheit (vgl. Bezugszeichen 150 in Fig. 1) ausgewertet. Basierend auf dieser Auswertung kann dann der elektromechanische Aktuator 124 angesteuert werden.

Nun zum zweiten Ventil 176, welches der Simulationseinrichtung 108 vorgeschaltet ist und in manchen Ausführungsformen entfallen kann. Diese Ventil 176 besitzt eine vorgegebene oder einstellbare Drosselfunktion. Mittels der einstellbaren Drosselfunktion lässt sich beispielsweise eine Hysterese oder anderweitige Kennlinie für das Pedalrückwirkverhalten erzielen. Ferner kann durch selektives Sperren des Ventils 176 die Bewegung des Kolbens 142B (bei geschlossenen Ventilen 174, 178) und damit der Bremspedalweg begrenzt werden.

Das dritte Ventil 178 ermöglich in seiner geöffneten Stellung das Fördern von Hydraulikfluid aus dem Kolben 142A in den Bremskreis I. bzw. die Hydraulikkammer 116 des Hauptzylinders 110 und umgekehrt. Eine Fluidförderung aus dem Kolben 142A in den Bremskreis I. ermöglicht beispielsweise ein schnelles Anbremsen (z.B. vor dem Einsetzen der Förderwirkung des elektromechanischen Aktuators 124), wobei das Ventil 178 umgehend wieder geschlossen wird. Ferner lässt sich bei geöffnetem Ventil 178 eine hydraulische Rückwirkung (z.B. einer mittels des elektromechanischen Aktuators 124 erzeugten Druckmodulation im Fahrdynamikregelbetrieb) über den Kolben 142B auf das Bremspedal erzielen.

In einer in den Anschluss 180 des Zylinders 142A mündenden Hydraulikleitung ist ein Drucksensor 148 vorgesehen, dessen Ausgangssignal einen Rückschluss auf die Betätigungskraft am Bremspedal gestattet. Das Ausgangssignal dieses Drucksensors 148 wird von einer in Fig. 1 nicht gezeigte Steuereinheit ausgewertet. Basierend auf dieser Auswertung kann dann eine Ansteuerung eines oder mehrerer der Ventile 170, 172, 174, 176, 178 zur Realisierung der oben geschilderten Funktionalitäten erfolgen. Ferner kann basierend auf dieser Auswertung der elektromechanische Aktuator 124 angesteuert werden.

Bei der in Fig. 2 gezeigten Bremsanlage 100 kann die in Fig. 1 dargestellte HCU 106 verwendet werden. In dieser Ausführungsform kann für die in Fig. 2 gezeigte Bremsanlage 100 somit die Multiplex-Anordnung gemäß Fig. 1 (mit insgesamt vier Ventilen zusätzlich zu den in Fig. 2 veranschaulichten Ventilen) zum Einsatz gelangen.

Bei der Bremsanlage 100 gemäß Fig. 2 können zusätzlich zu den vier Multiplex-Ventilen (Bezugszeichen 152, 154, 156, 158 in Fig. 1) weitere Ventile in den Multiplex-Betrieb einbezogen werden. So kann insbesondere der Multiplex-Betrieb auf das Ventil 178 ausgeweitet werden. In einem solchen Fall könnte ein Multiplex-Zyklus dann anstatt vier Zeitschlitzen fünf Zeitschlitze erfassen, die jeweils einem der Ventile 152, 154, 156, 158, 178 zugeordnet sind. In demjenigen Zeitschlitz, der dem Ventil 178 zugeordnet ist, lässt sich mittels des elektromechanischen Aktuators 134 Hydraulikfluid aus der Hydraulikkammer 116 in den Zylinder 142A fördern und wieder entnehmen. Auf diese Weise lässt sich unter Verwendung des elektromechanischen Aktuators 124 eine haptische Rückmeldung am Bremspedal geben. Diese haptische Rückmeldung kann beispielsweise in einem Fahrdynamik-Regelbetrieb erfolgen. So können auf diese Weise Hydraulikfluidpulsationen im Zylinder 142A erzeugt werden, die auf einen ABS-Regelbetrieb hinweisen.

Bei der Bremsanlage 100 gemäß Fig. 2 lässt sich der Rückspeisestrom auf dieselbe Weise wie bei der im Zusammenhang mit Fig. 1 erläuterten Fahrzeug-Bremsanlage verwenden. Zusätzlich wäre es denkbar, insbesondere wenn das Ventil 178 in den Multiplex-Betrieb miteinbezogen ist, auch das Ventil 178 mit dem Rückspeisestrom zu bestromen. Auch weitere Ventile, wie die Ventile 170, 172, könnten für diese Zwecke verwendet werden.

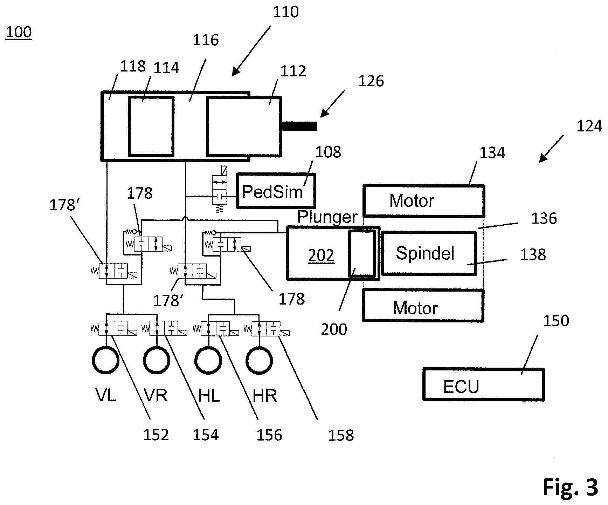

Fig. 3 zeigt ein weiteres Ausführungsbeispiel einer Bremsanlage 100. Übereinstimmende oder vergleichbare Elemente wie bei den Ausführungsbeispielen gemäß den Fign. 1 und 2 sind wiederum mit denselben Bezugszeichen bezeichnet. Abweichend von den Ausführungsbeispielen der Fign. 1 und 2 wirkt bei dem Ausführungsbeispiel gemäß Fig. 3 der elektromechanische Aktuator 124 nicht auf den Primärkolben 112 im Hauptzylinder 110 ein. Vielmehr wirkt der elektromechanische Aktuator 124 auf einen Kolben 200 ein, der in einem separaten Zylinder 202 aufgenommen und mit den Radbremsen VL, VR, HL und HR fluidisch koppelbar ist. Bei dem Kolben 200 handelt es sich um einen Plunger-Kolben.

Auch die Bremsanlage 400 gemäß Fig. 3 basiert auf dem BBW-Prinzip. Normalerweise, also im BBW-Modus, ist der Hauptzylinder 110 fluidisch von den Radbremsen VL, VR, HL und HR entkoppelt. Zu diesem Zweck sind zwei Absperrventile 178 vorgesehen, die sich jeweils in der Hydraulikleitung zwischen einer der Hydraulikkammern 116, 118 einerseits und den Radbremsen VL, VR, HL und HR andererseits befinden.

Die Ventile 178' werden lediglich in einem "push-trough"-Modus der Bremsanlage 100 geöffnet. In diesem Modus kann mittels eines mechanischen Aktuators 126, der mit einem in Fig. 3 nicht dargestellten Bremspedal gekoppelt ist, Hydraulikfluid aus den Kammern 116, 118 zu den Radbremsen VL, VR, HL und HR verschoben werden (die Multiplex-Ventile 152, 154, 156, 158 sind dann geöffnet). Im regulären BBW-Betrieb hingegen wird bei geschlossenen Ventilen 178' der Hydraulikdruck an den Radbremsen VL, VR, HL und HR mittels des elektromechanischen Aktuators 124 und Verschiebens des Plunger-Kolbens 200 aufgebaut. Hierzu sind Ventile 178 zwischen dem Zylinder 202 einerseits und den Radbremsen VL, VR, HL und HR andererseits zu öffnen.

Im vorliegenden Ausführungsbeispiel sind vom Multiplex-Betrieb die vier Ventile 154, 156, 158, welche wiederum den vier Radbremsen VL, VR, HL und HR zugeordnet sind, umfasst. Der Multiplex-Betrieb kann wie oben im Zusammenhang mit den Fign. 1 und 2 geschildert ablaufen. Gemäß einer Variante umfasst der Multiplex-Betrieb zusätzlich wenigstens eine der zwei in Fig. 3 veranschaulichten weiteren Ventilanordnungen, die jeweils zwei Ventile 178, 178' umfassen.

Ein Rückspeisestrom des Elektromotors 134 könnte, wie oben beschrieben, zur Bestromung eines oder mehrere der vier den Radbremsen VL, VR, HL und HR zugeordneten Ventile 152, 154, 156, 158 verwendet werden. Zusätzlich oder alternativ hierzu könnten andere der in Fig. 3 gezeigten Ventile, wie im Zusammenhang mit Fig. 2 bereits erläutert, mit dem Rückspeisestrom beaufschlagt werden.

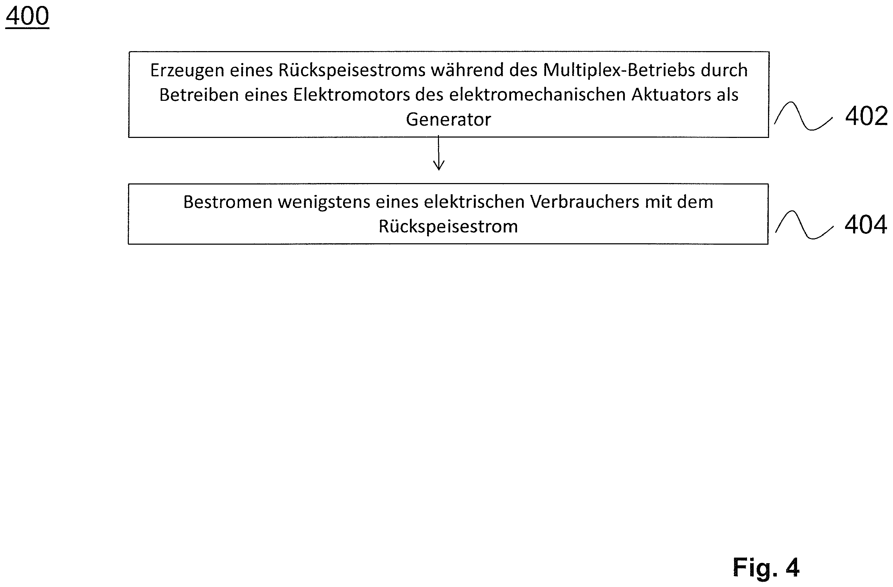

Fig. 4 veranschaulicht in einem Diagramm 400 allgemein die hier vorgeschlagenen Schritte zum Abbau von Rückspeisestromspitzen. Das in Fig. 4 erläuterte Verfahren könnte bei der Bremsanlage 100 gemäß einer der Fign. 1 bis 3 zum Einsatz gelangen.

In einem in Fig. 4 nicht dargestellten, anfänglichen Schritt wird eine Situation erkannt, die eine Fahrdynamikregelung (z. B. eine ABS-Regelung) erfordert. Infolge dieser Fahrdynamikregelung werden die Ventile 152, 154, 156, 158 in einem Multiplex-Betrieb auf Zeitschlitzbasis angesteuert. Während des Multiplex-Betriebs wird auch der Elektromotor 134 des elektromechanischen Aktuators 124 zeitschlitzsynchron betrieben. Dabei muss während einzelner Zeitschlitze die Motordrehzahl des Elektromotors reduziert werden, so dass der Elektromotor in den Generatorbetrieb übergeht und einen Rückspeisestrom erzeugt (vgl. Schritt 402 in Fig. 4).

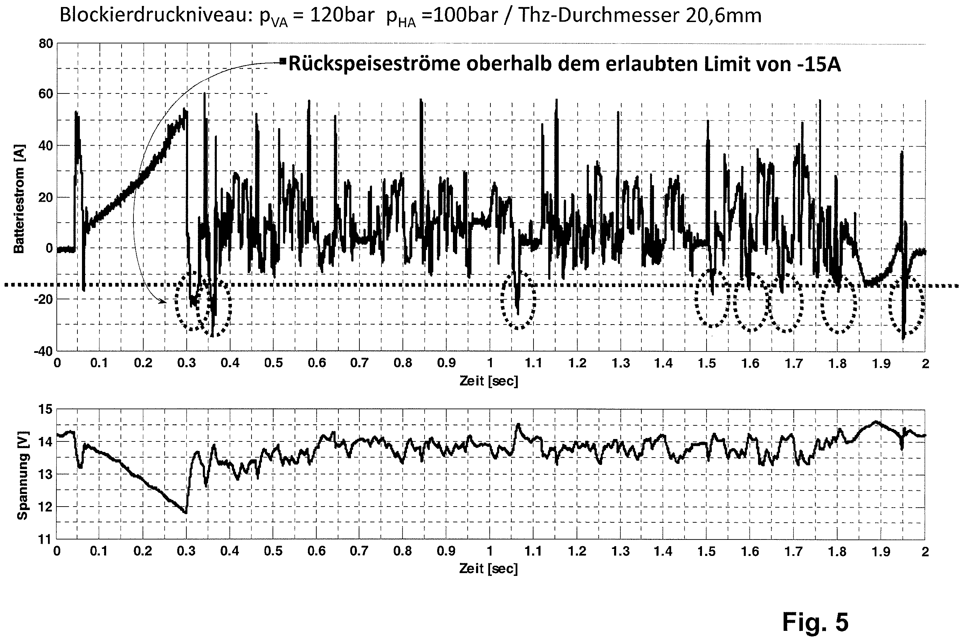

Fig. 5 zeigt in einem schematischen Diagramm den zeitlichen Verlauf der BordnetzSpannung sowie des Bordnetz-Stromes (Batteriestromes) im Rahmen des vorstehend beschriebenen Multiplex-Betriebs. Es wird hier von einem ABS-Druckniveau von 120 bar an den Radbremsen VL, VR der Vorderachse und einem ABS-Druckniveau von 100 bar an den Radbremsen HL, HR der Hinterachse ausgegangen sowie von einem Durchmesser des Hauptzylinders 110 von 20,6 mm.

Wie in Fig. 5 veranschaulicht, treten im Rahmen des Multiplex-Betriebs wiederholt Rückspeisestromspitzen von deutlich über -15 A auf (was auch zu Spitzen in der Bordnetzspannung führen kann). Diese Spitzen hängen mit einer besonders starken oder schnellen Drehzahlreduzierung des Elektromotors 134 zusammen.

Um eine Beschädigung von elektrischen Fahrzeug-Komponenten durch die Rückspeisestromspitzen zu vermeiden, wird in Schritt 404 wenigstens ein elektrischer Verbraucher kurzzeitig mit dem Rückspeisestrom bestromt. Im Zusammenhang mit den Fign. 1 bis 3 wurden bereits einige beispielhafte elektrische Verbraucher genannt.

In diesem Zusammenhang ist nochmals darauf hinzuweisen, dass auch der Elektromotor 134 selbst als elektrischer Verbraucher im Zusammenhang mit dem Rückspeisestrom verwendet werden kann. Der Strom zum Betreiben des Elektromotors 134 (hier ein Synchronmotor) weist eine Drehmoment bildende Komponente und eine Magnetfeld schwächende Komponente auf. Bei der Bestromung des Elektromotors 134 mit dem Rückspeisestrom wird die Magnetfeld schwächende Komponente unter Aufrecherhaltung der Drehmoment bildenden Komponente erhöht. Auf diese Weise nimmt die Leistungsaufnahme des Elektromotors 134 zu, wodurch der Rückspeisestrom zumindest teilweise kompensiert werden kann.

Die Bestromung des elektrischen Verbrauchers kann gemäß einer Implementierung synchron mit dem Betrieb des elektromechanischen Aktuators erfolgen. Gemäß einer weiteren Implementierung können Betriebszustände des Elektromotors vorab beurteilt werden und eine Bestromung des elektrischen Verbrauchers mit dem Rückspeisestrom auf solche Fälle beschränkt werden, in denen ein besonders hoher Rückspeisestrom zu erwarten ist (zum Beispiel aufgrund einer besonders hohen Drehzahlreduzierung oder einer Drehzahlreduzierung in einem besonders kurzen Zeitraum).

Zusätzlich oder alternativ zur Vorabbeurteilung des Rückspeisestroms auf Basis von Motorparametern, wie beispielsweise der zu erwartenden Drehzahlverringerung des Elektromotors, einer zu erwartenden Revision der Bewegungsrichtung des Elektromotors und/oder anhand des Zeitraums, in der die Drehzahlverringerung oder Umkehr der Bewegungsrichtung stattfindet, kann der Rückspeisestrom gemäß einer Implementierung direkt gemessen und auf Basis des Messergebnisses ein Verbraucher selektiv bestromt werden, um den Rückspeisestrom oder Rückspeisestromspitzen abzubauen.

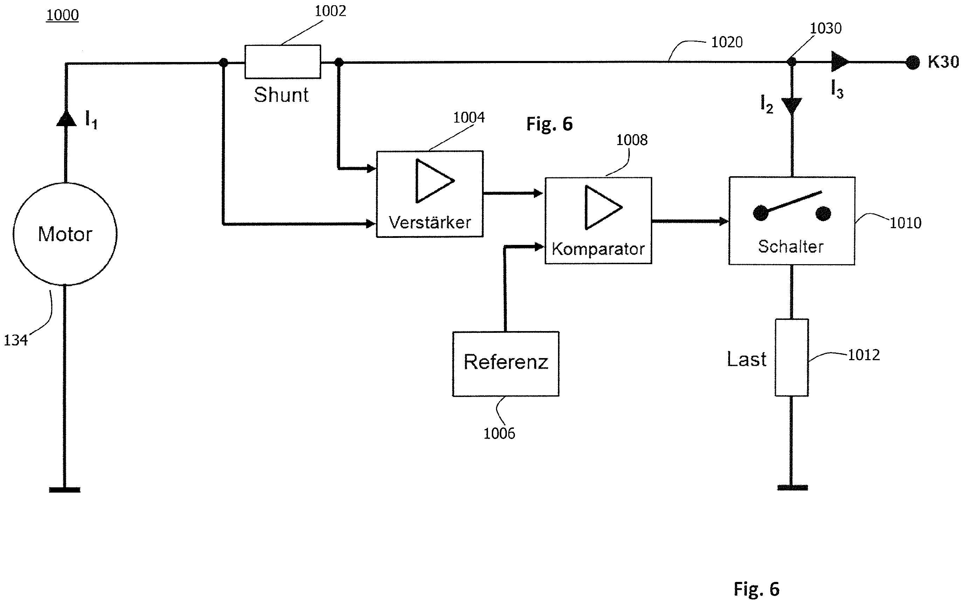

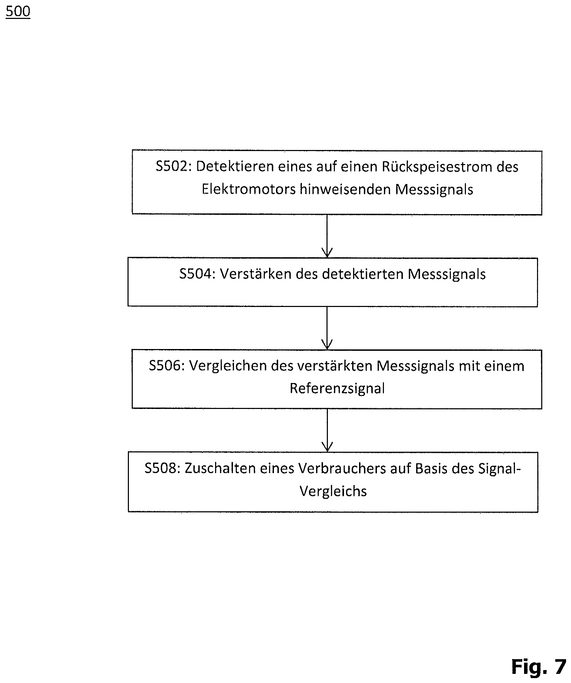

In den Fign. 6 und 7 werden ein elektrisches Schaltbild einer elektrischen Einrichtung 1000 und ein Verfahren zum Abbau bzw. zum Reduzieren von Rückspeiseströmen und/oder Rückspeisestromspitzen dargestellt. Die in Fig. 6 gezeigte elektrische Einrichtung 1000 kann hierbei ein Teil des elektronischen Steuergerät oder Steuergerätsystems 150 der Kraftfahrzeug-Bremsanlage 100 sein. Sie kann im elektronischen Steuergerät oder Steuergerätsystem 150 (z.B. als Untereinheit) implementiert sein. Alternativ hierzu kann die Einrichtung 1000 als eigenständige Einrichtung 1000 der Bremsanlage 100 ausgebildet sein. Das mit der Einrichtung 1000 durchgeführte Verfahren ist in Form von Softwareroutinen im elektronischen Steuergerät oder Steuergerätsystem 150 hinterlegt.

Fig. 6 zeigt ein elektrisches Schaltbild der Einrichtung 1000. Sie umfasst einen Shunt-Widerstand 1002, einen Verstärker 1004, einen Referenzsignalgeber 1006 und einen Komparator 1008. Ferner kann die Messeinrichtung 1000 einen Schaltungseinrichtung 1010 umfassen. Die Schaltungseinrichtung 1010, der Komparator 1008 und der Verstärker 1004 können durch Transistoren bzw. bekannte Transistorschaltungen realisiert sein.

Der Shunt-Widerstand 1002 ist in einer den Elektromotor 134 mit dem Bordnetz (in Fig. 6 mit K30 bezeichnet) elektrisch verbindenden Anschlussleitung 1020 seriell zum Elektromotor 134 angeordnet. Der Shunt-Widerstand 1002 ist als niederohmiger Widerstand ausgebildet und in der Anschlussleitung 1020 dazu vorgesehen, um ein Messsignal in Form eines Spannungssignals bereitzustellen, welches abhängig von dem über die Anschlussleitung 1020 und über den Shunt-Widerstand 1002 fließenden Strom ist. Gemäß dem Ohmschen Gesetz ist das Spannungssignal in seiner Höhe proportional zu dem in der Anschlussleitung fließenden Strom. Ferner gibt das Vorzeichen des am Shunt-Widerstand 1002 abgreifbaren Spannungssignals die Flussrichtung des Stromes wieder, so dass zwischen Verbraucherströmen (im Normalbetrieb verbraucht der Elektromotor Strom aus dem Bordnetz) und Rückspeiseströme (der Elektromotor wird als Generator betrieben (Schritt 402) und der vom Elektromotor 134 erzeugte Strom wird an das Bordnetz zurückgespeist) unterschieden werden kann.

Der zum Shunt-Widerstand 1002 parallel angeordnete Verstärker 1004 ist eingangsseitig mit dem Shunt-Widerstand 1002 elektrisch gekoppelt. Ausgangsseitig ist der Verstärker 1004 mit einem ersten Eingang des Verstärkers 1008 elektrisch gekoppelt. Der Verstärker 1004 ist dazu ausgebildet, das am Shunt-Widerstand 1002 abgreifbare Spannungssignal zu verstärken und das verstärkte Messsignal dem Komparator 1008 zuzuführen.

Der Referenzsignalgeber 1006 ist dazu ausgebildet, ein Referenzsignal (Vergleichsspannungssignal) zu erzeugen und dem Komparator 1008 bereitzustellen. Er ist hierzu mit einem zweiten Eingang des Komparators 1008 elektrisch gekoppelt.

Der mit dem Ausgang des Verstärkers 1004 und dem Ausgang des Referenzsignalgebers 1006 elektrisch gekoppelte Verstärker 1008 ist dazu ausgebildet, das verstärkte Messsignal (Spannungssignal) mit dem Referenzsignal zu vergleichen und ein auf Basis des Vergleiches abhängiges Betätigungssignal für die Schaltungseinrichtung 1010 bereitzustellen.

Die Schaltungseinrichtung 1010 ist mit dem Ausgang des Komparators 1008 elektrisch gekoppelt und dazu ausgebildet, in Abhängigkeit des Betätigungssignals in einen geschlossenen oder in einen geöffneten Zustand zu schalten. Der Komparator 1008 erzeugt das Betätigungssignal in Abhängigkeit des Vergleichs des Eingangssignals mit dem Referenzsignal derart, dass es die Schaltungseinrichtung 1010 in einen geschlossenen Zustand zu schalten vermag, wenn das (verstärkte) Eingangssignal das Referenzsignal übersteigt. Im geschlossenen Zustand verbindet die Schaltungseinrichtung eine Last 1012 mit der Anschlussleitung 1020 bzw. mit dem Bordnetz. Ein durch den Elektromotor 134 im Generatorbetrieb eingespeister Strom (Rückspeisestrom I₁ in Fig. 6) kann dann vom Elektromotor 134 aus betrachtet am Knoten 1030 als Zweigstrom I₂ über die Schaltungseinrichtung 1012 und die Last 1012 in Richtung Massepotenzial abfließen. Auf diese Weise wird gemäß dem ersten Kirchhoffschen Gesetz lediglich der Stromanteil I₃, welcher dem um den Zweigstrom I₂ verminderten eingespeisten Strom entspricht, dem Bordnetz zugeführt. Durch geeignete Wahl des Lastwiderstandes der Last 1012 kann der über die Last 1012 abfließende Stromanteil festgelegt werden. Der Lastwiderstand der Last 1012 ist so gewählt, dass ein Großteil des durch den Elektromotor 134 als Generator erzeugten Stroms über die Last 1012 abfließen kann. Dadurch wird vermieden, dass ein das Bordnetz belastender großer Rückspeisestrom in das Bordnetz zurückfließt.

Als Last 1012 kann ein elektrischer Verbraucher, der Teil der Bremsanlage ist, oder ein anderer elektrischer Verbraucher des Kraftfahrzeuges dienen, wie bereits in Zusammenhang mit den Fign. 1 bis 5 oben diskutiert. Als Last 1012, kann ein Widerstand oder eine variable Schaltung aus Widerständen dienen, welche den über den Widerstand fließenden Strom bzw elektrische Energie in Wärme umwandelt.

Fig. 7 zeigt in einem Flussdiagramm 500 ein Ausführungsbeispiel zum automatischen Reduzieren bzw. Abbauen von Rückspeiseströmen oder Rückspeisestromspitzen mit Hilfe der in Fig. 6 gezeigten Einrichtung 1000. Das Verfahren kann im Rahmen des in Fig. 4 gezeigten Verfahrens durchgeführt werden.

Wird der Elektromotor 134 als Generator betrieben (Schritt 402), so wird zunächst in einem ersten Schritt S502 ein auf einen Rückspeisestrom hinweisendes Messsignal detektiert. Das Messsignal ist hierbei ein über den Shunt-Widerstand 1002 abfallendes Spannungssignal. Die Höhe des Rückspeisestroms kann mit Hilfe des seriell angeordneten Shunt-Widerstandes 1002 und mit Hilfe des zum Shunt-Widerstand 1002 parallel angeordneten Verstärkers 1004 genau detektiert werden, denn die über den Shunt-Widerstand 1002 abfallende Spannung ist direkt proportional zu dem über den Shunt-Widerstand 1002 fließenden Strom (und somit zum Rückspeisestrom des Generators). Insbesondere gibt das Vorzeichen der am Shunt-Widerstand 1002 abfallenden Spannung die Richtung des Stromflusses wieder, so dass zwischen einem vom Motor stammenden Rückspeisestrom und einem vom Bordnetz bereitgestellten Betriebsstrom für den Elektromotor 134 unterschieden werden kann.

Die am Shunt-Widerstand 1002 abfallende Spannung wird abgegriffen und dem Verstärker 1004 zugeführt. Das Abgreifen der Spannung kann kontinuierlich oder in vorgegebenen Zeiträumen erfolgen. In einem darauffolgenden zweiten Schritt S504 wird das dem Rückspeisestrom proportionale Spannungssignal verstärkt. Das verstärkte Signal wird dann dem Komparator 1008 zugeführt.

Im nächsten, dritten Schritt S506 wird das verstärkte Spannungssignal im Komparator 1008 verglichen. Zum Vergleich wird ein Referenzsignal durch den Referenzsignalgeber 1006 dem Komparator 1008 bereitgestellt. Das Referenzsignal dient als Schwellenwert für das detektierte Spannungssignal. Übersteigt das detektierte (und verstärkte) Spannungssignal den Wert des Referenzsignals, so wird ein Betätigungssignal am Ausgang des Komparators 1008 bereitgestellt, welches die Schalteinrichtung 1012 von einer geöffneten Zustand in einen geschlossenen Zustand schaltet. Ist hingegen der gemessene und verstärkte Spannungswert kleiner oder gleich der Referenzspannung, so wird ein Betätigungssignal ausgegeben, welches die Schalteinrichtung 1012 in eine geöffnete Schaltstellung schaltet.

Über die bereitgestellte Referenzspannung wird somit ein Schwellenwert für einen maximal zulässigen Rückspeisestrom festgelegt, welcher in das Bordnetz eingespeist werden darf. Übersteigt der Rückspeisestrom (bzw. das dem Rückspeisestrom proportionale Spannungssignal) den Schwellenwert, so wird dem Elektromotor 134 eine Last zugeschaltet (Schritt S508). Nach Zuschalten der Last wird diese mit dem vom Elektromotor 134 bereitgestellten Strom bestromt (Schritt 404 in Fig. 4), wodurch zumindest ein Teil der durch den Elektromotor 134 erzeugten Leistung verbraucht wird, bevor sie in das Bordnetz eingespeist wird.

Die Schalteinrichtung 1012 wird immer dann mittels eines durch den Komparator ausgegebenen Betätigungssignals in einen geschlossenen Zustand geschaltet, wenn der Rückspeisestrom einen festgelegten Schwellenwert überschreitet. Umgekehrt wird die Schalteinrichtung 1012 durch ein entsprechendes Betätigungssignal vom Komparator 1008 immer dann in einen geöffneten Zustand geschaltet (sofern die Schalteinrichtung 1012 geschlossen war), wenn der Rückspeisestrom den festgelegten Schwellenwert nicht überschreitet. Somit können insbesondere für das Bordnetz gefährliche Spitzen im Rückspeisestrom (siehe Fig. 5) eliminiert werden, da die Last 1012 immer dann zugeschaltet wird, wenn derartige Spitzen auftreten. Abhängig von der Festlegung der Höhe des Schwellenwerts kann ein Teil (Stromspitzenwerte) des generierten Rückspeisestroms oder gar der ganze Rückspeisestrom eliminiert werden.Insgesamt vermeidet die hier vorgestellte Lehre schädliche Auswirkungen des Rückspeisestroms. Auf diese Weise können sensible elektrische Verbraucher des Kraftfahrzeugs, beispielsweise Steuergeräte, zuverlässig vor Rückspeisestromspitzen geschützt werde. Die Fahrzeugsicherheit wird damit erhöht. Das Verfahren eignet sich insbesondere für Bremsanlagen, die mit im Multiplex-Betrieb angesteuerten Ventilanordnungen ausgerüstet sind. Es wurde erkannt, dass der Multiplex-Betrieb zu besonders ausgeprägten Rückspeisestromspitzen führen kann.

## Patentansprüche

1. Verfahren für das Betreiben einer elektrohydraulischen Kraftfahrzeug-Bremsanlage (100), die einen Hauptzylinder (110), einen elektromechanischen Aktuator (124) zur Erzeugung eines Hydraulikdrucks an mehreren Radbremsen und einen Satz elektrisch betätigbarer Ventilanordnungen (152, 154, 156, 158, 176) aufweist, wobei der Satz Ventilanordnungen (152, 154, 156, 158, 176) je eine erste Ventilanordnung (152, 154, 156, 158) zwischen dem Hauptzylinder (110) und jeder Radbremse umfasst, um mittels des elektromechanischen Aktuators (124) den für jede der Radbremsen jeweils vorgesehenen Bremsdruck zu erzeugen, umfassend die Schritte:
Erzeugen eines Rückspeisestroms durch Betreiben eines Elektromotors (134) des elektromechanischen Aktuators (124) als Generator; und
Bestromen wenigstens eines elektrischen Verbrauchers (134, 152, 154, 156, 158, 176) mit dem Rückspeisestrom.

2. Verfahren nach Anspruch 1, wobei die ersten Ventilanordnungen (152, 154, 156, 158) in einem Multiplexbetrieb ansteuerbar sind, wobei der Rückspeisestrom während des Multiplexbetriebs durch Betreiben des Elektromotors (134) als Generator erzeugt wird.

3. Verfahren nach einem der vorhergehenden Ansprüche, ferner umfassend:
Zuschalten eines elektrischen Verbrauchers (152, 154, 156, 158) an den Elektromotor (134), um den vom Elektromotor (134) im Generatorbetrieb erzeugten Rückspeisestrom ganz oder teilweise zu verbrauchen; und/oder
Detektieren eines auf einen vom Elektromotor (134) erzeugten Rückspeisestrom hinweisenden Signals; und
Vergleichen des Signals mit einem auf eine Stromobergrenze hinweisenden Referenzsignal.

4. Verfahren nach Anspruch 3, ferner umfassend:
Zuschalten des elektrischen Verbrauchers (152, 154, 156, 158) an den Elektromotor (134), wenn das Signal das Referenzsignal übersteigt.

5. Verfahren nach einem der vorhergehenden Ansprüche, wobei der wenigstens eine elektrische Verbraucher Teil der elektrohydraulischen Kraftfahrzeug-Bremsanlage (100) ist; und/oder
wobei der wenigstens eine elektrische Verbraucher der Elektromotor (134) ist und wobei mittels des Rückspeisestroms im Elektromotor (134) vorzugsweise ein Feldstrom erzeugt wird.

6. Verfahren nach einem der vorhergehenden Ansprüche, wobei der wenigstens eine elektrische Verbraucher wenigstens eine Ventilanordnung (152, 154, 156, 15, 176) aus dem Satz von Ventilanordnungen umfasst; und
wobei die wenigstens eine als elektrischer Verbraucher vorgesehene Ventilanordnung vorzugsweise wenigstens eine der ersten Ventilanordnungen (152, 154, 156, 158) umfasst.

7. Verfahren nach Anspruch 6, wobei der Satz Ventilanordnungen wenigstens eine zweite Ventilanordnung umfasst, die das Hinzuschalten einer hydraulischen Simulationseinrichtung (108) für ein Pedalrückwirkverhalten gestattet, und wobei die wenigstens eine als elektrischer Verbraucher vorgesehene Ventilanordnung wenigstens die zweite Ventilanordnung (176) umfasst.

8. Verfahren nach einem der Ansprüche 6 oder 7, wobei die wenigstens eine Ventilanordnung mit mittels des Rückspeisestroms mit einem höheren Strom als im Normalbetrieb bestromt wird; und
wobei die wenigstens eine Ventilanordnung vorzugsweise über eine Pulsweitenmodulation mit dem Rückspeisestrom beaufschlagt wird.

9. Computerprogrammprodukt mit Programmcodemitteln die das Verfahren nach einem der vorhergehenden Ansprüche durchführen, wenn das Computerprogrammprodukt auf wenigstens einem Prozessor abläuft.

10. Kraftfahrzeug-Steuergerät oder -Steuergerätesystem, umfassend das Computerprogrammprodukt nach Anspruch 9.

11. Elektrohydraulische Kraftfahrzeug-Bremsanlage (100), umfassend
einen Hauptzylinder (110);
einen elektromechanischen Aktuator (124) zur Erzeugung eines Hydraulikdrucks an mehreren Radbremsen; und
einen Satz elektrisch betätigbarer Ventilanordnungen (152, 154, 156, 158, 176) mit je einer ersten Ventilanordnung (152, 154, 156, 158) zwischen dem Hauptzylinder (110) und jeder Radbremse, um mittels des elektromechanischen Aktuators (124) den für jede der Radbremsen jeweils vorgesehenen Bremsdruck zu erzeugen; und
ein Steuergerät oder Steuergerätesystem (150), das ausgebildet ist zum
Erzeugen eines Rückspeisestroms durch Betreiben eines Elektromotors (134) des elektromechanischen Aktuators (124) als Generator; und
Bestromen wenigstens eines elektrischen Verbrauchers (134, 152, 154, 156, 158, 176) mit dem Rückspeisestrom.

12. Elektrohydraulische Kraftfahrzeug-Bremsanlage (100) nach Anspruch 11, wobei das Steuergerät oder Steuergerätesystem (150) dazu ausgebildet ist, die ersten Ventilanordnungen (152, 154, 156, 158) im Multiplexbetrieb anzusteuern, wobei der Rückspeisestrom während des Multiplexbetriebs durch Betreiben des Elektromotors (134) als Generator erzeugt wird.

13. Elektrohydraulische Kraftfahrzeug-Bremsanlage (100) nach Anspruch 11 oder 12, wobei das Steuergerät oder Steuergerätesystem (150) dazu ausgebildet ist:
ein Signal zu detektieren, welches auf ein vom Elektromotor (134) erzeugten Rückspeisestrom hinweist;
das Signal mit einem auf eine Stromobergrenze hinweisenden Referenzsignal zu vergleichen; und
wobei das Steuergerät oder Steuergerätesystem (150) vorzugsweise ferner dazu ausgebildet ist,
den elektrischen Verbraucher an den Elektromotor (134) zuzuschalten, wenn das Signal das Referenzsignal übersteigt

14. Bremsanlage nach einem der Ansprüche 11 bis 13, wobei der elektromechanische Aktuator (124) auf einen im Hauptzylinder (110) aufgenommenen Kolben (112; 114) einwirkt.

15. Bremsanlage nach einem der Ansprüche 11 bis 13, wobei der elektromechanische Aktuator (124) ausgebildet ist, um auf einen Kolben (200) einzuwirken, der in einem zusätzlich zum Hautpzylinder (110) vorgesehenen Zylinder (102) geführt ist, wobei der zusätzliche Zylinder (202) mit Radbremsen fluidisch koppelbar oder gekoppelt ist.

## Claims

1. A method for operating an electrohydraulic motor-vehicle brake system (100) which has a master cylinder (110), an electromechanical actuator (124) for generating a hydraulic pressure at a plurality of wheel brakes, and a set of electrically actuable valve arrangements (152, 154, 156, 158, 176), the set of valve arrangements (152, 154, 156, 158, 176) each comprising a first valve arrangement (152, 154, 156, 158) between the master cylinder (110) and each wheel brake in order to generate the respective braking pressure intended for each of the wheel brakes by means of the electromechanical actuator (124), comprising the steps:
generating a regenerative current by operating an electric motor (134) of the electromechanical actuator (124) as a generator; and
energising at least one electrical load (134, 152, 154, 156, 158, 176) with the regenerative current.

2. A method according to Claim 1, wherein the first valve arrangements (152, 154, 156, 158) can be controlled in a multiplex operation with the regenerative current being generated during the multiplex operation by operating the electric motor (134) as a generator.

3. A method according to one of the preceding claims, further comprising:
connecting an electrical load (152, 154, 156, 158) to the electric motor (134) in order to fully or partially consume the regenerative current generated by the electric motor (134) in generator mode; and/or
detecting a signal which indicates a regenerative current generated by the electric motor (134); and
comparing the signal to a reference signal indicating an upper current limit.

4. A method according to Claim 3, further comprising:
connecting the electrical load (152, 154, 156, 158) to the electric motor (134) when the signal exceeds the reference signal.

5. A method according to one of the preceding claims, wherein the at least one electrical load is part of the electrohydraulic motor-vehicle brake system (100), and/or
wherein the at least one electrical load is the electric motor (134) and
wherein preferably a field current is generated by means of the regenerative current in the electric motor (134).

6. A method according to one of the preceding claims, wherein the at least one electrical load comprises at least one valve arrangement (152, 154, 156, 158, 176) from the set of valve arrangements; and
wherein the at least one valve arrangement provided as an electrical load preferably comprises at least one of the first valve arrangements (152, 154, 156, 158).

7. A method according to Claim 6, wherein the set of valve arrangements comprises at least one second valve arrangement which enables the additional connection of a hydraulic simulation device (108) for a pedal reaction behaviour, and wherein the at least one valve arrangement provided as an electrical load comprises at least the second valve arrangement (176).

8. A method according to one of Claims 6 or 7, wherein the at least one valve arrangement is energised by means of the regenerative current with a higher current than in normal mode; and
wherein the regenerative current is fed to the at least one valve arrangement preferably via a pulse-width modulation.

9. A computer program product with program code means, which perform the method according to one of the preceding claims when the computer program product runs on at least one processor.

10. A motor-vehicle control or control system comprising the computer program product according to Claim 9.

11. An electrohydraulic motor-vehicle brake system (100) comprising
a master cylinder (110);
an electromechanical actuator (124) for generating a hydraulic pressure at a plurality of wheel brakes; and
a set of electrically actuable valve arrangements (152, 154, 156, 158, 176) each with a first valve arrangement (152, 154, 156, 158) between the master cylinder (110) and each wheel brake in order to generate the respective braking pressure intended for each of the wheel brakes by means of the electromechanical actuator (124); and
a control device or control device system (150) which is designed for generating a regenerative current by operating an electric motor (134) of the electromechanical actuator (124) as a generator; and
energising at least one electrical load (134, 152, 154, 156, 158, 176) with the regenerative current.

12. An electrohydraulic motor-vehicle brake system (100) according to Claim 11, wherein the control device or control device system (150) is designed to control the first valve arrangements (152, 154, 156, 158) in multiplex mode, with the regenerative current being generated during the multiplex operation by operating the electric motor (134) as a generator.

13. An electrohydraulic motor-vehicle brake system (100) according to Claim 11 or 12, wherein the control device or control device system (150) is designed:
to detect a signal which indicates a regenerative current generated by the electric motor (134); and
to compare the signal with a reference signal indicating an upper current limit; and
wherein the control device or control device system (150) is preferably designed:
to connect the electrical load to the electric motor (134) when the signal exceeds the reference signal.

14. A brake system according to one of Claims 11 to13, wherein the electromechanical actuator (124) acts on a piston (112; 114) received in the master cylinder (110).

15. A brake system according to one of Claims 11 to 13, wherein the electromechanical actuator (124) is designed to act on a piston (100) which is guided in a cylinder (102) provided in addition to the master cylinder (100), with the additional cylinder (202) being fluidically coupleable or coupled to wheel brakes.

## Revendications

1. Procédé de fonctionnement d'un système de freinage électrohydraulique de véhicule automobile (100) comprenant un maître-cylindre (110), un actionneur électromécanique (124) pour produire une pression hydraulique sur plusieurs freins de roues et un jeu d'agencements de soupapes (152, 154, 156, 158, 176) à commande électrique, le jeu d'agencements de soupapes (152, 154, 156, 158, 176) comprenant chacun un premier agencement de soupapes (152, 154, 156, 158) entre le maître-cylindre (110) et chaque frein de roue pour produire, au moyen de l'actionneur électromécanique (124), la pression de freinage prévue pour chacun des freins de roue, comprenant les étapes suivantes :
production d'un courant de retour en faisant fonctionner un moteur électrique (134) de l'actionneur électromécanique (124) comme générateur ; et
alimentation d'au moins un consommateur électrique (134, 152, 154, 156, 158, 176) avec ledit courant de retour.

2. Procédé selon la revendication 1, dans lequel les premiers agencements de soupapes (152, 154, 156, 158) sont aptes à être commandés dans un mode multiplex, le courant de retour étant produit pendant le mode multiplex en faisant fonctionner le moteur électrique (134) comme générateur.

3. Procédé selon l'une des revendications précédentes, comprenant en outre :
raccordement d'un consommateur électrique (152, 154, 156, 158) au moteur électrique (134) pour consommer en totalité ou en partie le courant de retour produit par le moteur électrique (134) en mode générateur ; et/ou
détection d'un signal indiquant un courant de retour produit par le moteur électrique (134) ; et
comparaison du signal avec un signal de référence indiquant une limite supérieure de courant.

4. Procédé selon la revendication 3, comprenant en outre :
raccordement du consommateur électrique (152, 154, 156, 158) au moteur électrique (134) lorsque le signal dépasse le signal de référence.

5. Procédé selon l'une des revendications précédentes, dans lequel ledit au moins un consommateur électrique fait partie du système de freinage électrohydraulique de véhicule automobile (100) ; et/ou
dans lequel ledit au moins un consommateur électrique est le moteur électrique (134) et dans lequel un courant de champ est produit de préférence dans le moteur électrique (134) au moyen du courant de retour.

6. Procédé selon l'une des revendications précédentes, dans lequel ledit au moins un consommateur électrique comprend au moins un agencement de soupapes (152, 154, 156, 15, 176) du jeu d'agencements de soupapes ; et
dans lequel ledit au moins un agencement de soupapes prévu comme consommateur électrique comprend au moins un des premiers agencements de soupapes (152, 154, 156, 158).

7. Procédé selon la revendication 6, dans lequel le jeu d'agencements de soupapes comprend au moins un deuxième agencement de soupapes permettant le raccordement d'un dispositif de simulation hydraulique (108) pour un comportement de réaction de pédale, et dans lequel ledit au moins un agencement de soupapes prévu comme consommateur électrique comprend au moins le deuxième agencement de soupapes (176).

8. Procédé selon l'une des revendications 6 ou 7, dans lequel ledit au moins un agencement de soupapes est alimenté au moyen du courant de retour avec un courant plus élevé qu'en mode normal ; et
dans lequel ledit au moins un agencement de soupapes est alimenté en courant de retour de préférence par une modulation de largeur d'impulsions.

9. Produit programme d'ordinateur avec des moyens de codage de programme mettant en oeuvre le procédé selon l'une des revendications précédentes lorsque le produit programme d'ordinateur est exécuté sur au moins un processeur.

10. Module de commande ou système de modules de commande de véhicule automobile, comprenant le produit programme d'ordinateur selon la revendication 9.

11. Système de freinage électrohydraulique de véhicule automobile (100), comprenant
un maître-cylindre (110) ;
un actionneur électromécanique (124) pour produire une pression hydraulique sur plusieurs freins de roue ; et
un jeu d'agencements de soupapes (152, 154, 156, 158, 176) à commande électrique comprenant chacun un premier agencement de soupapes (152, 154, 156, 158) entre le maître-cylindre (110) et chaque frein de roue pour produire, au moyen de l'actionneur électromécanique (124), la pression de freinage prévue pour chacun des freins de roue ; et
un module de commande ou système de modules de commande (150) conçu pour produire un courant de retour en faisant fonctionner un moteur électrique (134) de l'actionneur électromécanique (124) comme générateur ; et
alimentation d'au moins un consommateur électrique (134, 152, 154, 156, 158, 176) avec le courant de retour.

12. Système de freinage électrohydraulique de véhicule automobile (100) selon la revendication 11, dans lequel le module de commande ou système de modules de commande (150) est conçu pour commander les premiers agencements de soupapes (152, 154, 156, 158) en mode multiplex, le courant de retour étant produit pendant le mode multiplex en faisant fonctionner le moteur électrique (134) comme générateur.

13. Système de freinage électrohydraulique de véhicule automobile (100) selon la revendication 11 ou 12, dans lequel le module de commande ou système de modules de commande (150) est conçu pour :
détecter un signal indiquant un courant de retour produit par le moteur électrique (134) ;
comparer le signal avec un signal de référence indiquant une limite supérieure de courant ; et
dans lequel le module de commande ou système de modules de commande (150) de préférence est en outre conçu pour
raccorder le consommateur électrique au moteur électrique (134) lorsque le signal dépasse le signal de référence.

14. Système de freinage selon l'une des revendications 11 à 13, dans lequel l'actionneur électromécanique (124) agit sur un piston (112 ; 114) logé dans le maître-cylindre (110).

15. Système de freinage selon l'une des revendications 11 à 13, dans lequel l'actionneur électromécanique (124) est conçu pour agir sur un piston (200) qui est guidé dans un cylindre (102) prévu en plus du maître-cylindre (110), le cylindre supplémentaire (202) étant accouplé ou susceptible d'être accouplé fluidiquement aux freins de roue.
